# EUROPEAN PATENT APPLICATION

(11) **EP 4 819 306 A1**
(43) Date of publication of application: **07.10.2026**
(21) Application number: 24897059.2
(22) Date of filing: 26.09.2024
(51) Int. Cl.: H01M 10/658, H01M 10/613, H01M 50/204, H01M 50/342

(54) **BATTERY PACK**

(30) Priority: 29.11.2023 JP 2023201990
(71) Applicant: IBIDEN CO., LTD., Ogaki-shi, Gifu 503-8604 (JP)
(72) Inventor: TOJO, Akinori, Ibi-gun, Gifu 501-0695 (JP); ANDO, Hisashi, Ibi-gun, Gifu 501-0695 (JP)
(74) Representative: Hoefer & Partner Patentanwälte mbB
(86) International application number: PCT/JP2024/034403
(87) International publication number: WO 2025/115369

(57) **Abstract**

Provided is a battery pack capable of preventing a chain of thermal runaway due to high-temperature gas generated during thermal runaway from an abnormal battery cell. The battery pack of the present invention includes: a module including a plurality of battery cells each provided with a safety valve; a case housing the module; and a heat insulating material provided between the module and the case, wherein the heat insulating material includes a first heat insulating sheet and a second heat insulating sheet laminated on the first heat insulating sheet, the heat insulating material is arranged such that the first heat insulating sheet is positioned on the module side and the second heat insulating sheet is positioned on the case side, the second heat insulating sheet includes a plurality of openings extending through the second heat insulating sheet, each of the plurality of openings is provided with one or more covering pieces that cover at least part of the opening, the one or more covering pieces are bonded to the first heat insulating sheet and/or the second heat insulating sheet by an adhesive layer, and each of the openings is positioned to overlap at least part of a corresponding one of the safety valves in a transparent plan view of the second heat insulating sheet.

## Description

### TECHNICAL FIELD

The present invention relates to battery packs.

### BACKGROUND ART

A battery pack including a module with a plurality of battery cells and a case containing the module may generate high-temperature gas or flame in the event of thermal runaway. Such gas or flame may spread to the surroundings, potentially inducing further thermal runaway.

For the purpose of preventing a chain of thermal runaway, battery packs have conventionally included a safety valve in the module to release high-temperature gas generated during thermal runaway.

Also, when high-temperature gas discharged via the safety valve directly impinges on the case, the temperature of the case may increase, causing the heat of the case to influence the surroundings.

Thus, for the purpose of preventing high-temperature gas from directly impinging on the case, battery packs have conventionally included a heat insulating material between the module and the case.

An example of such a battery pack is the power storage device disclosed in Patent Literature 1. The power storage device includes a power storage stack including a plurality of power storage cells each provided with an exhaust valve on an upper surface, an upper case that covers the power storage stack from an upper side, and a first heat-resistant sheet and a second heat-resistant sheet that have heat resistance against exhaust gas exhausted from the exhaust valves and are provided between the upper case and the power storage stack, wherein the first heat-resistant sheet is provided with a plurality of holes at positions overlapping the exhaust valves in a vertical direction, and the second heat-resistant sheet is provided above the first heat-resistant sheet so as to cover the plurality of holes.

### CITATION LIST

### - Patent Literature

Patent Literature 1: JP 2023-59480 A

### SUMMARY OF INVENTION

### - Technical Problem

In the power storage device (battery pack) disclosed in Patent Literature 1, during thermal runaway, high-temperature gas discharged from an abnormal battery cell via an exhaust valve is blown upward through a hole in the first heat-resistant sheet toward the second heat-resistant sheet, thereby pushing the second heat-resistant sheet upward. As a result, the second heat-resistant sheet separates from the first heat-resistant sheet, and a gas flow path is formed between the first heat-resistant sheet and the second heat-resistant sheet. The gas is blocked by the second heat-resistant sheet and is therefore prevented from blowing against the upper case, so that damage to the upper case can be suppressed. In addition, the first heat-resistant sheet suppresses contact between the gas blocked by the second heat-resistant sheet and an adjacent cell, thereby suppressing an increase in temperature of the adjacent cell.

However, in the power storage device (battery pack) disclosed in Patent Literature 1, since the high-temperature gas is blocked by the second heat-resistant sheet, the high-temperature gas may flow backward through another hole in the first heat-resistant sheet and enter a normal cell adjacent to the abnormal battery cell via an exhaust valve. When the high-temperature gas flows backward, the normal cell may undergo thermal runaway.

In other words, the power storage device (battery pack) disclosed in Patent Literature 1 cannot sufficiently prevent a chain of thermal runaway.

The present invention has been made to solve the above problem and aims to provide a battery pack capable of preventing a chain of thermal runaway due to high-temperature gas generated during thermal runaway from an abnormal battery cell.

### - Solution to Problem

The battery pack of the present invention includes: a module including a plurality of battery cells each provided with a safety valve; a case housing the module; and a heat insulating material provided between the module and the case, wherein the heat insulating material includes a first heat insulating sheet and a second heat insulating sheet laminated on the first heat insulating sheet, the heat insulating material is arranged such that the first heat insulating sheet is positioned on the module side and the second heat insulating sheet is positioned on the case side, the second heat insulating sheet includes a plurality of openings extending through the second heat insulating sheet, each of the plurality of openings is provided with one or more covering pieces that cover at least part of the opening, the one or more covering pieces are bonded to the first heat insulating sheet and/or the second heat insulating sheet by an adhesive layer, and each of the openings is positioned to overlap at least part of a corresponding one of the safety valves in a transparent plan view of the second heat insulating sheet.

The battery pack of the present invention can prevent a chain of thermal runaway due to high-temperature gas generated during thermal runaway from an abnormal battery cell. The principle thereof will be described below.

In the battery pack of the present invention, the module includes safety valves. Accordingly, when a battery cell undergoes thermal runaway and high-temperature gas is generated, the gas is discharged via a safety valve. The gas discharged via the safety valve reaches a heat insulating material.

The heat insulating material includes a first heat insulating sheet and a second heat insulating sheet laminated on the first heat insulating sheet.

The heat insulating material is arranged such that the first heat insulating sheet is positioned on the module side and the second heat insulating sheet is positioned on the case side.

Therefore, gas reaching the heat insulating material first comes into contact with the first heat insulating sheet.

The gas passes through passages formed by melting of the first heat insulating sheet and gaps formed in the first heat insulating sheet.

The second heat insulating sheet includes openings extending through the second heat insulating sheet.

Furthermore, at least one opening is positioned to overlap at least part of one of the safety valves in a transparent plan view of the second heat insulating sheet.

Therefore, the gas passing through the first heat insulating sheet reaches a vicinity of the opening in the second heat insulating sheet.

Each opening is provided with one or more covering pieces that cover at least part of the opening, and the one or more covering pieces are bonded to the first heat insulating sheet and/or the second heat insulating sheet by an adhesive layer.

The gas reaching the vicinity of the opening in the second heat insulating sheet is at a high temperature and thermally decomposes the adhesive layer bonding the covering pieces, thereby weakening the bonding between the covering pieces and the first heat insulating sheet and/or the second heat insulating sheet.

Furthermore, gas pressure is applied to the covering pieces from the module side toward the case side.

As a result, the covering pieces are peeled off from the first heat insulating sheet and/or the second heat insulating sheet.

Then, the gas passing through the first heat insulating sheet passes through the opening in the second heat insulating sheet and is discharged into a space between the heat insulating material and the case.

In such a case, the high-temperature gas decreases in temperature during passage through the first heat insulating sheet, and the gas pressure also decreases. Therefore, even when the gas discharged through the opening comes into contact with the case, the case is less likely to undergo a temperature increase due to the gas and is less likely to be damaged.

Furthermore, the gas discharged through the opening in the second heat insulating sheet is diffused between the heat insulating material and the case and also reaches other openings in the second heat insulating sheet.

However, since the other openings in the second heat insulating sheet are provided, inside the openings, with one or more covering pieces, even when the gas reaches the other openings in the second heat insulating sheet, the gas can be prevented from flowing backward to the module side through the other openings in the second heat insulating sheet.

By such a principle, in the present invention, high-temperature gas generated during thermal runaway from an abnormal battery cell can be prevented from reaching other battery cells. Accordingly, a chain of thermal runaway can be prevented.

In the battery pack of the present invention, each of the plurality of openings is preferably provided, inside the opening, with at least one covering piece, and each of the plurality of openings is preferably provided, inside the opening, with a plurality of covering pieces.

Covering pieces are easily peeled off from the first heat insulating sheet and/or the second heat insulating sheet when provided inside the openings.

In the battery pack of the present invention, each of the plurality of openings is preferably provided, inside the opening, with a plurality of covering pieces.

In order to prevent backflow of high-temperature gas from the case side, no gap is preferably present between the openings and the covering pieces.

When the covering pieces are provided inside the openings so that no gap is formed between the openings and the covering pieces, the provision of a plurality of covering pieces results in a smaller size of each covering piece than when providing a monolithic covering piece.

When a monolithic covering piece is provided in an opening and is peeled off by gas from the module side, the monolithic covering piece, which is large, may block the flow of the gas and inhibit diffusion of the gas.

On the other hand, when a plurality of covering pieces are provided in an opening and are peeled off by gas from the module side, each covering piece, which is small, is less likely to inhibit diffusion of the gas.

In the battery pack of the present invention, at least some of the plurality of covering pieces are preferably arranged to be in contact with each other.

Furthermore, in the battery pack of the present invention, at least part of the covering pieces is preferably arranged to be in contact with the outline of the opening.

Such a provision of the covering pieces facilitates prevention of backflow of gas through gaps between the covering pieces or through gaps between the covering pieces and the opening.

In the battery pack of the present invention, the covering pieces are preferably arranged to cover the outline of the opening from the case side.

Such a provision of the covering pieces prevents formation of a gap between the covering pieces and the opening, thereby facilitating prevention of backflow of gas between the covering pieces and the opening.

In the battery pack of the present invention, the first heat insulating sheet includes one or more cuts continuously extending from a main surface on which the second heat insulating sheet is laminated to an opposite main surface, and in a plan view of the heat insulating material from the second heat insulating sheet side, at least part of each of the one or more cuts is positioned inside a corresponding one of the openings.

The first heat insulating sheet including such cuts allows high-temperature gas from the module side to more easily reach the covering pieces through the cuts.

In the battery pack of the present invention, in a plan view of the heat insulating material from the second heat insulating sheet side, the one or more cuts may be formed in a line shape.

Line-shaped cuts can be easily formed using a cutter or the like.

In the battery pack of the present invention, in a plan view of the heat insulating material from the second heat insulating sheet side, the one or more cuts may be formed to intersect an outline of one of the openings.

In the battery pack of the present invention, the first heat insulating sheet preferably includes a plurality of cuts.

In the battery pack of the present invention, preferably, in a plan view of the heat insulating material from the second heat insulating sheet side, the first heat insulating sheet includes a plurality of cuts formed in a line shape, and at least some of the plurality of cuts are in contact with each other.

When the cuts are formed in this manner, high-temperature gas from the module side more easily passes through the first heat insulating sheet.

In the battery pack of the present invention, preferably, the opening is provided, inside the opening, with a plurality of covering pieces, at least some of the plurality of covering pieces are in contact with each other, and in a plan view of the heat insulating material from the second heat insulating sheet side, each of the one or more cuts is formed along a portion where the covering pieces are in contact with each other.

Such covering pieces and cuts can be formed by simultaneously punching a monolithic covering piece sheet and the first heat insulating sheet.

In the battery pack of the present invention, in a plan view of the heat insulating material from the second heat insulating sheet side, the portion where the covering pieces are in contact with each other is preferably formed in a straight-line shape.

Such covering pieces and cuts can be formed by simultaneously punching a monolithic covering piece sheet and the first heat insulating sheet in a straight line.

In the battery pack of the present invention, the openings preferably have plan view shapes of at least one type selected from the group consisting of a triangle, a quadrangle, a hexagon, a circle, an ellipse, and a racetrack.

Openings having such shapes can be easily formed.

In the battery pack of the present invention, the first heat insulating sheet is preferably an inorganic fiber mat.

The inorganic fiber mat can be easily formed, and the inorganic fiber mat exhibits excellent performance as the first heat insulating sheet.

In the battery pack of the present invention, the inorganic fiber mat is preferably formed by processing inorganic fibers into a mat shape, the inorganic fibers including at least one type of fiber selected from silica fibers, glass fibers, alumina fibers, aluminosilicate fibers, basalt fibers, rock wool, and biosoluble fibers.

The inorganic fiber mat made of such materials can be easily processed.

In the battery pack of the present invention, the inorganic fiber mat is formed by processing inorganic fibers into a mat shape, the inorganic fibers including fibers having a melting point of 1000°C or higher.

When the inorganic fiber mat includes fibers having a melting point of 1000°C or higher, owing to the high heat resistance of the inorganic fibers, the inorganic fiber mat is less likely to deteriorate even when high-temperature gas from an abnormal battery cell reaches the inorganic fiber mat.

In the battery pack of the present invention, the inorganic fiber mat is formed by processing inorganic fibers into a mat shape, the inorganic fibers including fibers having a melting point of lower than 1000°C.

When the inorganic fiber mat includes fibers having a melting point of lower than 1000°C, the inorganic fiber mat tends to melt and form a gas flow path when high-temperature gas from an abnormal battery cell reaches the inorganic fiber mat.

In the battery pack of the present invention, the second heat insulating sheet may be a mica sheet or may be a heat-resistant resin sheet.

These materials are suitable as the second heat insulating sheet.

In the battery pack of the present invention, the covering pieces are preferably made of the same material as the second heat insulating sheet.

When a monolithic sheet is punched out to form openings, the second heat insulating sheet and the covering pieces can be produced simultaneously.

In the battery pack of the present invention, the adhesive layer preferably includes an organic adhesive layer.

The adhesive layer including an organic adhesive layer is more likely to be thermally decomposed when high-temperature gas from an abnormal battery cell passes through the inorganic fiber mat and reaches the covering pieces.

Accordingly, the covering pieces are more easily peeled off from the inorganic fiber mat.

In the battery pack of the present invention, the heat insulating material may further include a third heat insulating sheet, and the third heat insulating sheet may be laminated on the second heat insulating sheet to cover the openings from the case side.

Such a battery pack is arranged such that the first heat insulating sheet is positioned on the lower side in the vertical direction and the third heat insulating sheet is positioned on the upper side in the vertical direction.

In the battery pack configured in such a manner, since the safety valves are positioned on the upper side in the vertical direction, high-temperature gas from an abnormal battery cell is discharged toward the upper side in the vertical direction.

Furthermore, the gas passes through the openings formed in the second heat insulating sheet and reaches the third heat insulating sheet.

The gas is blocked by the third heat insulating sheet. As a result, contact between the gas and the case can be prevented.

Moreover, the third heat insulating sheet is pushed upward by the gas and thereby separated from the second heat insulating sheet. Accordingly, the gas is diffused through a gap formed between the third heat insulating sheet and the second heat insulating sheet. Then, the temperature and pressure of the gas decrease.

In the battery pack of the present invention, the case may include a housing member including a bottom portion and a side wall portion, and a lid member covering the housing member, and the safety valves may be positioned on the bottom portion side or the lid member side.

From a fail-safe viewpoint, the battery pack of the present invention may be arranged such that the safety valves are positioned on the upper side in the vertical direction or on the lower side in the vertical direction.

Since the battery pack is often arranged such that the bottom portion or the lid member of the case is positioned on the lower side, positioning the safety valves on the bottom portion side or the lid member side facilitates positioning the safety valves on the upper side in the vertical direction or on the lower side in the vertical direction.

### - Advantageous Effects of Invention

The present invention can provide a battery pack capable of preventing a chain of thermal runaway due to high-temperature gas generated during thermal runaway from an abnormal battery cell.

### BRIEF DESCRIPTION OF DRAWINGS

FIG. 1A is a schematic perspective view of an example of a battery pack according to a first embodiment of the present invention.
FIG. 1B is a cross-sectional view taken along line A-A in FIG. 1A.
FIG. 1C is an exploded view of the battery pack illustrated in FIG. 1A.
FIG. 2A is a schematic cross-sectional view of an example of one safety valve and a vicinity thereof in the battery pack according to the first embodiment of the present invention.
FIG. 2B is a plan view of the safety valve illustrated in FIG. 2A as viewed from the heat insulating material side.
FIG. 3A is an explanatory view sequentially illustrating a principle by which a chain of thermal runaway is prevented when one battery cell undergoes thermal runaway in the battery pack according to the first embodiment of the present invention.
FIG. 3B is an explanatory view sequentially illustrating the principle by which a chain of thermal runaway is prevented when one battery cell undergoes thermal runaway in the battery pack according to the first embodiment of the present invention.
FIG. 3C is an explanatory view sequentially illustrating the principle by which a chain of thermal runaway is prevented when one battery cell undergoes thermal runaway in the battery pack according to the first embodiment of the present invention.
FIG. 4A is a schematic plan view of an example of other shapes of mica pieces in the battery pack according to the first embodiment of the present invention.
FIG. 4B is a schematic plan view of an example of other shapes of mica pieces in the battery pack according to the first embodiment of the present invention.
FIG. 4C is a schematic plan view of an example of other shapes of mica pieces in the battery pack according to the first embodiment of the present invention.
FIG. 4D is a schematic plan view of an example of other shapes of mica pieces in the battery pack according to the first embodiment of the present invention.
FIG. 4E is a schematic plan view of an example of other shapes of mica pieces in the battery pack according to the first embodiment of the present invention.
FIG. 5A is an enlarged schematic cross-sectional view of an example of a cross-section of a heat insulating material provided in a battery pack according to a second embodiment of the present invention.
FIG. 5B is a plan view illustrating an example of a mica sheet included in the heat insulating material illustrated in FIG. 5A.
FIG. 5C is a plan view illustrating an example of an inorganic fiber mat included in the heat insulating material illustrated in FIG. 5A.
FIG. 6A is a schematic plan view illustrating another example of a cut formed in an inorganic fiber mat in the battery pack according to the second embodiment of the present invention.
FIG. 6B is a schematic plan view illustrating another example of an opening formed in a mica sheet, and a mica piece, in the battery pack according to the second embodiment of the present invention.
FIG. 7A is a schematic plan view illustrating another example of a cut formed in an inorganic fiber mat in the battery pack according to the second embodiment of the present invention.
FIG. 7B is a schematic plan view illustrating another example of an opening formed in a mica sheet, and mica pieces, in the battery pack according to the second embodiment of the present invention.
FIG. 8A is a schematic plan view illustrating another example of a cut formed in an inorganic fiber mat in the battery pack according to the second embodiment of the present invention.
FIG. 8B is a schematic plan view illustrating another example of an opening formed in a mica sheet, and mica pieces, in the battery pack according to the second embodiment of the present invention.
FIG. 9A is an enlarged schematic cross-sectional view of an example of a cross-section of a heat insulating material provided in a battery pack according to a third embodiment of the present invention.
FIG. 9B is an enlarged schematic cross-sectional view of another example of a cross-section of the heat insulating material provided in the battery pack according to the third embodiment of the present invention.
FIG. 9C is an enlarged schematic cross-sectional view of another example of a cross-section of the heat insulating material provided in the battery pack according to the third embodiment of the present invention.
FIG. 10 is an enlarged schematic cross-sectional view of an example of a battery pack according to a fourth embodiment of the present invention.
FIG. 11A is an explanatory view sequentially illustrating a principle by which a chain of thermal runaway is prevented when one battery cell undergoes thermal runaway in the battery pack according to the fourth embodiment of the present invention.
FIG. 11B is an explanatory view sequentially illustrating the principle by which a chain of thermal runaway is prevented when one battery cell undergoes thermal runaway in the battery pack according to the fourth embodiment of the present invention.
FIG. 11C is an explanatory view sequentially illustrating the principle by which a chain of thermal runaway is prevented when one battery cell undergoes thermal runaway in the battery pack according to the fourth embodiment of the present invention.
FIG. 12 is a photograph of a heat insulating material according to Example 1-1 of the present invention taken from the mica sheet side.
FIG. 13 is a photograph of a heat insulating material according to Example 1-2 of the present invention taken from the mica sheet side.
FIG. 14 is a schematic explanatory view of gas pressure Rupture test 1.
FIG. 15A is a photograph taken from the second jig side before opening of the gas valve in the gas pressure rupture test using the heat insulating material according to Example 1-1.
FIG. 15B is a photograph taken from the second jig side after opening of the gas valve in the gas pressure rupture test using the heat insulating material according to Example 1-1.
FIG. 16A is a photograph taken from the second jig side before opening of the gas valve in the gas pressure rupture test using the heat insulating material according to Example 1-2.
FIG. 16B is a photograph taken from the second jig side after opening of the gas valve in the gas pressure rupture test using the heat insulating material according to Example 1-2.
FIG. 17A is a schematic plan view of an inorganic fiber mat according to Example 2-1.
FIG. 17B is a schematic plan view of an opening in the mica sheet and a mica piece according to Example 2-1.
FIG. 18A is a schematic plan view of a cut in an inorganic fiber mat according to Example 2-2.
FIG. 18B is a schematic plan view of an opening in a mica sheet and mica pieces according to Example 2-2.
FIG. 19A is a schematic plan view of a cut in an inorganic fiber mat according to Example 2-3.
FIG. 19B is a schematic plan view of an opening in a mica sheet and a mica piece according to Example 2-3.
FIG. 20A is a schematic plan view of an inorganic fiber mat according to Comparative Example 2-1.
FIG. 20B is a schematic plan view of a mica sheet according to Comparative Example 2-1.
FIG. 21 is a schematic explanatory view illustrating Rupture test 2.

### DESCRIPTION OF EMBODIMENTS

The battery pack of the present invention will be described in detail below. However, the present invention is not limited to the configurations described below, and can be appropriately applied through modification without departing from the gist of the present invention. Combinations of two or more preferred embodiments of the present invention described below are also included in the present invention.

### (First embodiment)

A battery pack according to a first embodiment of the present invention will be described, in which a first heat insulating sheet, a second heat insulating sheet, and covering pieces that constitute a heat insulating material are an inorganic fiber mat, a mica sheet, and mica pieces, respectively.

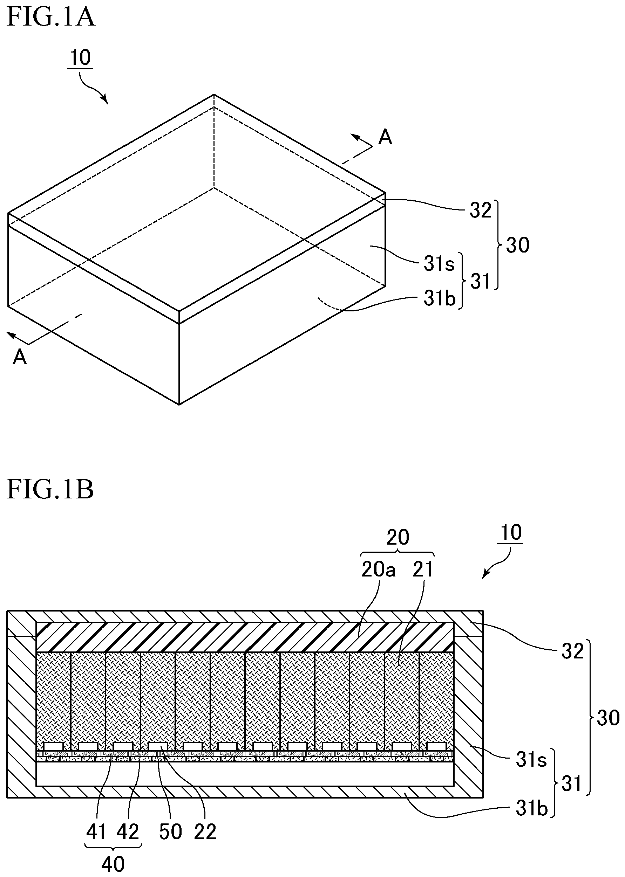

FIG. 1A is a schematic perspective view of an example of a battery pack according to a first embodiment of the present invention.

FIG. 1B is a cross-sectional view taken along line A-A in FIG. 1A.

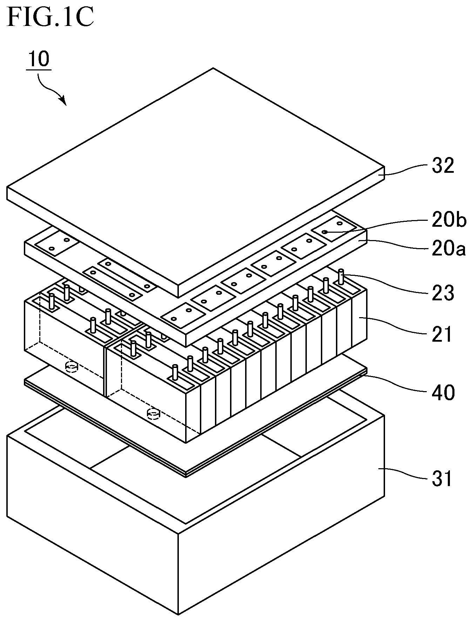

FIG. 1C is an exploded view of the battery pack illustrated in FIG. 1A.

A battery pack 10 illustrated in FIG. 1A, FIG. 1B, and FIG. 1C includes a module 20 including a plurality of battery cells 21, and a case 30 housing the module 20.

As illustrated in FIG. 1B, in the battery pack 10, each battery cell 21 is provided with a safety valve 22.

As illustrated in FIG. 1B, the case 30 includes a housing member 31 including a bottom portion 31b and a side wall portion 31s, and a lid member 32 covering the housing member 31. The module 20 is housed in the housing member 31.

Furthermore, in the battery pack 10, a heat insulating material 40 is provided between the module 20 and the case 30.

The battery cell 21 stores electric power, and is preferably, for example, a rechargeable secondary battery. Examples of secondary batteries include lithium-ion batteries, nickel-metal hydride batteries, and sodium-ion batteries.

The battery cells 21 illustrated in FIG. 1B and FIG. 1C have a rectangular parallelepiped shape. In the battery pack of the present invention, the battery cells may have a three-dimensional shape other than the rectangular parallelepiped shape (for example, a cubic shape or a modified shape).

As illustrated in FIG. 1B and FIG. 1C, in the module 20, the plurality of battery cells 21 are arranged in a row and fixed by a connection module member 20a.

Furthermore, as illustrated in FIG. 1C, each battery cell 21 has a terminal 23. Adjacent battery cells 21 are electrically connected by busbars 20b, which are provided on the connection module member 20a and connect the terminals 23.

The busbars 20b are flat plate-shaped members that are made of metal and are conductive. Examples of materials for the busbars 20b include copper, copper alloys, stainless steel (SUS), and aluminum.

The busbars 20b may be fixed to the terminals 23 by any fixing means (for example, screwing, welding).

Examples of materials for the case 30 include steel and aluminum. The steel is preferably stainless steel (SUS).

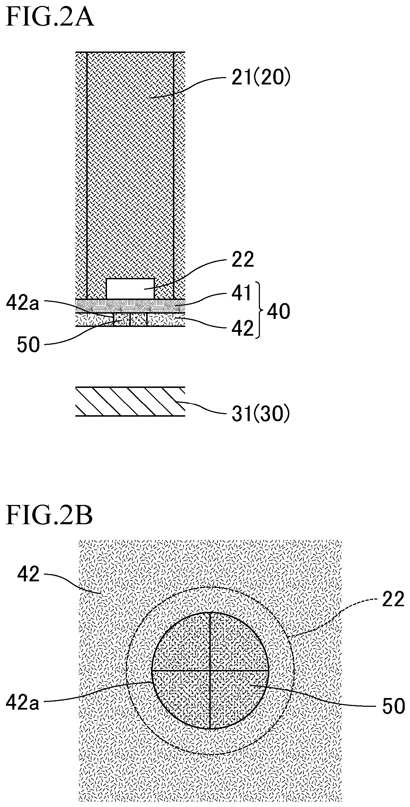

FIG. 2A is a schematic cross-sectional view of an example of one safety valve and a vicinity thereof in the battery pack according to the first embodiment of the present invention.

FIG. 2B is a plan view of the safety valve illustrated in FIG. 2A as viewed from the heat insulating material side.

As illustrated in FIG. 2A, the heat insulating material 40 includes an inorganic fiber mat 41 serving as the first heat insulating sheet, and a mica sheet 42 serving as the second heat insulating sheet and laminated on the inorganic fiber mat 41.

The heat insulating material 40 is arranged such that the inorganic fiber mat 41 is positioned on the module 20 side and the mica sheet 42 is positioned on the case 30 side.

As illustrated in FIG. 2A, the mica sheet 42 includes an opening 42a extending through the mica sheet 42. As illustrated in FIG. 2B, the opening 42a is provided, inside the opening, with four mica pieces 50 serving as the covering pieces.

The mica pieces 50 are bonded to the inorganic fiber mat 41 by an adhesive layer (not shown).

In addition, as illustrated in FIG. 2B, one opening 42a is positioned to overlap one safety valve 22 in a transparent plan view of the mica sheet 42.

Furthermore, as illustrated in FIG. 2B, the opening 42a is circular. Moreover, the four mica pieces 50 have identical fan shapes and form a circle when combined.

The four mica pieces 50 are in exact contact with the outline of the opening 42a and are also in contact with one another to form a circle.

In the battery pack 10, a chain of thermal runaway due to high-temperature gas generated during thermal runaway from an abnormal battery cell can be prevented. The principle thereof will be described below.

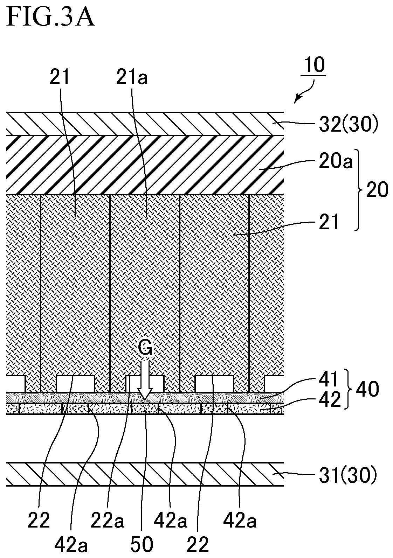

FIGS. 3A to 3C are explanatory views sequentially illustrating a principle by which a chain of thermal runaway is prevented when one battery cell undergoes thermal runaway in the battery pack according to the first embodiment of the present invention.

As illustrated in FIG. 3A, when one battery cell 21a undergoes thermal runaway and high-temperature gas is generated from the battery cell 21a, gas G (in FIG. 3A, the gas is denoted by reference sign "G", with the gas flow direction indicated by an arrow) is discharged via a safety valve 22a.

Then, the gas discharged via the safety valve 22a reaches the heat insulating material 40.

The heat insulating material 40 includes the inorganic fiber mat 41 and the mica sheet 42 laminated on the inorganic fiber mat 41.

The heat insulating material 40 is arranged such that the inorganic fiber mat 41 is positioned on the module 20 side and the mica sheet 42 is positioned on the case 30 side.

Accordingly, the gas G that has reached the heat insulating material 40 first comes into contact with the inorganic fiber mat 41.

The inorganic fiber mat 41 is not dense and includes spaces present between inorganic fibers, thereby allowing the gas G to pass through the inorganic fiber mat 41.

The mica sheet 42 includes the openings 42a extending through the mica sheet 42. An opening 42a overlaps a safety valve 22 in a transparent plan view of the mica sheet 42.

Therefore, the gas G passing through the inorganic fiber mat 41 reaches a vicinity of the opening 42a in the mica sheet 42.

Each opening 42a in the mica sheet 42 is provided, inside the opening, with mica pieces 50, and the mica pieces 50 are bonded to the inorganic fiber mat 41 by an adhesive layer (not shown).

The gas G reaching the vicinity of the opening 42a in the mica sheet 42 is at a high temperature and therefore thermally decomposes the adhesive layer bonding the mica pieces 50, thereby weakening the bonding between the mica pieces 50 and the inorganic fiber mat 41.

Furthermore, gas pressure is applied to the mica pieces 50 from the module 20 side toward the case 30 side.

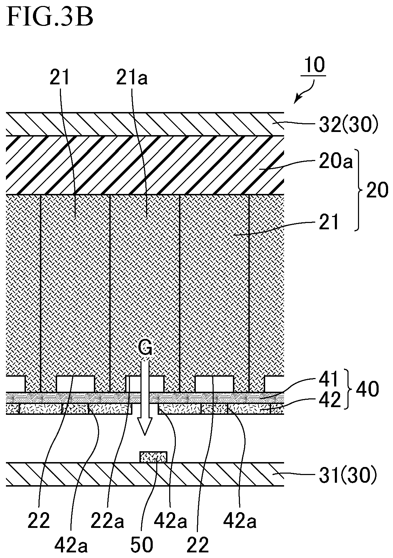

As a result, as illustrated in FIG. 3B, the mica pieces 50 are peeled off from the inorganic fiber mat 41.

Then, the gas G passing through the inorganic fiber mat 41 passes through the opening 42a in the mica sheet 42 and is discharged into a space between the heat insulating material 40 and the case 30.

In such a case, the high-temperature gas G decreases in temperature while passing through the inorganic fiber mat 41, and the gas pressure also decreases. Therefore, even when the gas G discharged through the opening 42a comes into contact with the case 30, the case 30 is less likely to undergo a temperature increase due to the gas G and is less likely to be damaged.

Furthermore, since the gas G is discharged through the opening 42a in the mica sheet 42, the gas G can be prevented from flowing backward via another safety valve 22 through the interior of the inorganic fiber mat 41.

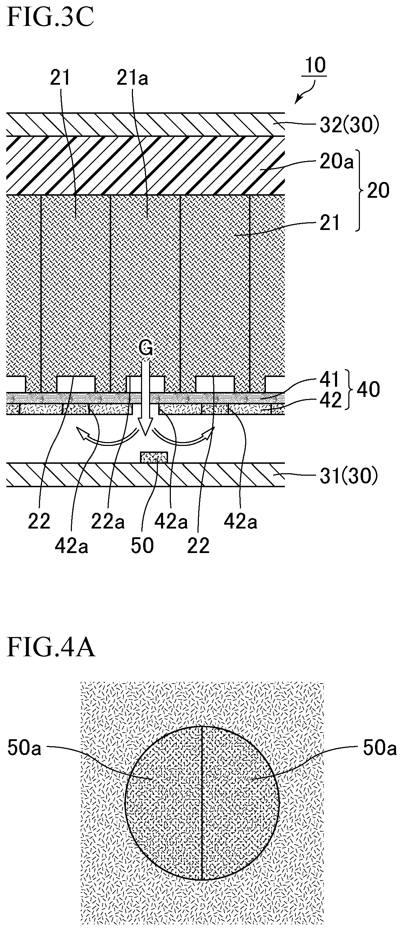

Furthermore, as illustrated in FIG. 3C, the gas G discharged through the opening 42a in the mica sheet 42 is diffused between the heat insulating material 40 and the case 30 and also reaches other openings 42a in the mica sheet 42.

However, since the other openings 42a in the mica sheet 42 are provided, inside the openings, with the mica pieces 50, even when the gas G reaches the other openings 42a in the mica sheet 42, the gas can be prevented from flowing backward to the module 20 side through the other openings 42a in the mica sheet 42.

By such a principle, in the battery pack 10, the high-temperature gas G generated during thermal runaway from an abnormal battery cell 21a can be prevented from reaching other battery cells 21. Accordingly, a chain of thermal runaway can be prevented.

Preferable aspects of the heat insulating material of the battery pack according to the first embodiment of the present invention will be described below.

### (Inorganic fiber mat)

The inorganic fiber mat 41 preferably has a thickness of 0.5 to 10 mm, more preferably 1 to 4 mm.

Gas passing through the inorganic fiber mat having a thickness of less than 0.5 mm is less likely to undergo a temperature decrease or a pressure decrease because the inorganic fiber mat is thin.

As a result, the gas reaches the case vigorously while remaining at a high temperature, and is therefore more likely to deteriorate the case.

The inorganic fiber mat having a thickness exceeding 10 mm is excessively thick, making it difficult to reduce the overall size of the battery pack.

The inorganic fiber mat 41 preferably has a bulk density of 0.1 to 1.0 g/cm³, more preferably 0.2 to 0.7 g/cm³.

The inorganic fiber mat 41 having a bulk density of less than 0.1 g/cm³ has large spaces between the inorganic fibers, thereby allowing the gas to be less likely to undergo a temperature decrease or a gas pressure decrease when the gas passes through the inorganic fiber mat. As a result, the gas reaches the case vigorously while remaining at a high temperature, and is therefore more likely to deteriorate the case.

The inorganic fiber mat 41 having a bulk density exceeding 1.0 g/cm³ is less likely to allow the gas to pass through the inorganic fiber mat. As a result, high-temperature gas tends to remain inside the battery cell, so that the temperature inside the battery cell is less likely to decrease. Therefore, a chain of thermal runaway tends to occur.

The inorganic fiber mat 41 is preferably formed by processing inorganic fibers into a mat shape, the inorganic fibers including at least one type of fiber selected from silica fibers, glass fibers, alumina fibers, aluminosilicate fibers, basalt fibers, rock wool, and biosoluble fibers.

The inorganic fiber mat made of such materials can be easily processed.

The inorganic fiber mat 41 may be formed by processing inorganic fibers into a mat shape, the inorganic fibers including fibers having a melting point of 1000°C or higher. Examples of such inorganic fibers include silica fibers, alumina fibers, aluminosilicate fibers, and biosoluble fibers.

When the inorganic fiber mat includes fibers having a melting point of 1000°C or higher, owing to the high heat resistance of the inorganic fibers, the inorganic fiber mat is less likely to deteriorate even when high-temperature gas from an abnormal battery cell reaches the inorganic fiber mat.

The inorganic fiber mat 41 may be formed by processing inorganic fibers into a mat shape, the inorganic fibers including fibers having a melting point of lower than 1000°C. Examples of such inorganic fibers include glass fibers, basalt fibers, and rock wool.

When the inorganic fiber mat includes fibers having a melting point of lower than 1000°C, the inorganic fiber mat tends to melt and form a gas flow path when high-temperature gas from an abnormal battery cell reaches the inorganic fiber mat.

### (Mica sheet)

The mica sheet 42 preferably has a thickness of 0.05 to 2.0 mm, more preferably 0.1 to 1.0 mm, still more preferably 0.1 to 0.5 mm.

The mica sheet having a thickness of less than 0.05 mm exhibits reduced strength and is prone to damage.

The mica sheet having a thickness exceeding 2.0 mm is excessively thick, making it difficult to reduce the overall size of the battery pack.

In FIG. 2B, the opening 42a formed in the mica sheet 42 has a circular plan view shape. However, in the battery pack according to the first embodiment of the present invention, the openings formed in the mica sheet may have plan view shapes such as a triangle, a quadrangle, a hexagon, an ellipse, a racetrack, or the like.

Openings having such shapes can be easily formed.

The opening 42a preferably has a plan view shape with an area of 1.0 to 18 cm², more preferably 3 to 12 cm².

The openings having a plan view shape with an area of less than 1.0 cm² tend not to allow gas to pass therethrough.

The openings having a plan view shape with an area exceeding 18 cm² tend to be larger than a region of the mica sheet reached by the gas. As will be described in detail later, a mica piece provided inside an opening is peeled off from the inorganic fiber mat when the gas reaches the mica piece; therefore, a mica piece provided in a region not reached by the gas tends not to be peeled off.

In the battery pack 10, each of the openings may be positioned to overlap at least part of a corresponding one of the safety valves in a transparent plan view of the mica sheet 42. Preferably, each of the openings is positioned within the outline of one safety valve.

When the openings are positioned in this manner, gas discharged via a safety valve can more easily reach the opening.

### (Mica pieces)

In the heat insulating material 40 illustrated in FIG. 2B, the mica pieces 50 are in contact with one another, and each mica piece 50 is in exact contact with the outline of the opening 42a.

In other words, the opening 42a is covered by the mica pieces 50 without a gap.

Therefore, in the battery pack 10, backflow of the high-temperature gas G from the case 30 side can be prevented.

In the heat insulating material 40 illustrated in FIG. 2B, four mica pieces 50 are provided inside an opening 42a.

When the mica pieces 50 are provided inside the opening 42a so that no gap is formed between the opening 42a and the mica pieces 50, the provision of a plurality of mica pieces results in a smaller size of each mica piece than when providing a monolithic (integrated) mica piece.

When a monolithic (integrated) mica piece is provided in the opening 42a and is peeled off by the gas G from the module 20 side, the monolithic (integrated) mica piece, which is large, may block the flow of the gas G and inhibit diffusion of the gas.

On the other hand, when a plurality of mica pieces 50 are provided in the opening 42a and are peeled off by the gas G from the module 20 side, each mica piece 50, which is small, is less likely to inhibit diffusion of the gas G.

As described above, in the heat insulating material 40 illustrated in FIG. 2B, the mica pieces 50 are provided in an opening 42a without a gap.

However, in the battery pack according to the first embodiment of the present invention, a gap may be present between one opening and a mica piece provided inside the opening, and a gap may also be present between the mica pieces.

Furthermore, in the battery pack according to the first embodiment of the present invention, a monolithic (integrated) mica piece may be provided in an opening.

In such a configuration, the number of mica pieces to be provided in the entire battery pack is reduced, thereby enabling efficient production of the battery pack.

Next, the shapes of mica pieces when a plurality of mica pieces are provided inside an opening will be described below.

FIG. 4A to FIG. 4E are schematic plan views of examples of other shapes of mica pieces in the battery pack according to the first embodiment of the present invention.

As illustrated in FIG. 4A, the mica pieces in the battery pack according to the first embodiment of the present invention may include two mica pieces 50a.

The two mica pieces 50a are semicircular and form a circle when combined.

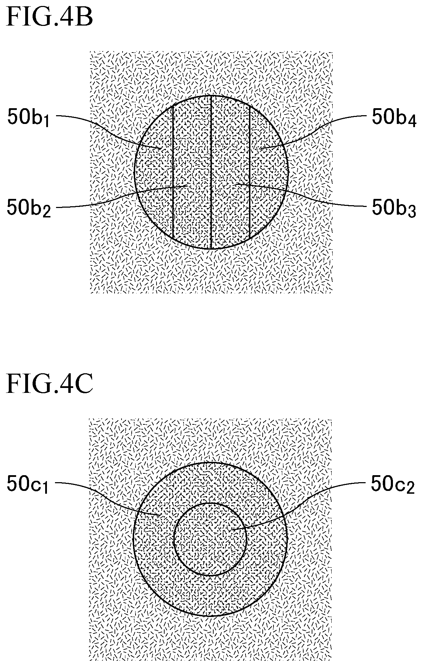

As illustrated in FIG. 4B, the mica pieces in the battery pack according to the first embodiment of the present invention may include four mica pieces 50b₁, 50b₂, 50b₃, and 50b₄.

The mica pieces 50b₁, 50b₂, 50b₃, and 50b₄ are shaped to form a circle when arranged in order from the left. In other words, the mica pieces 50b₁, 50b₂, 50b₃, and 50b₄ have shapes obtained by dividing a circle into four equal parts by straight lines equally spaced in a direction perpendicular to a horizontal direction.

As illustrated in FIG. 4C, the mica pieces in the battery pack according to the first embodiment of the present invention may include two mica pieces 50c₁ and 50_{c2}.

The mica piece 50c₁ is annular, and the mica piece 50c₂ is circular and positioned inside the mica piece 50ci.

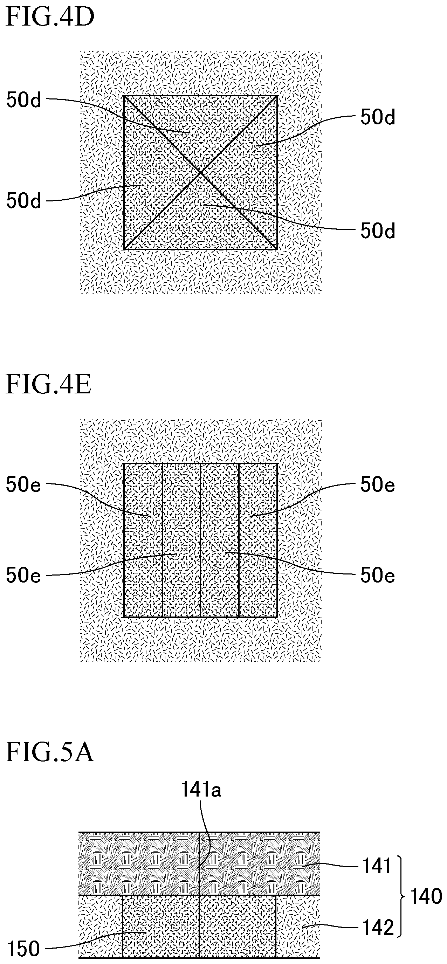

As illustrated in FIG. 4D, the mica pieces in the battery pack according to the first embodiment of the present invention may include four mica pieces 50d.

The mica pieces 50d are right isosceles triangles and form a square when combined.

As illustrated in FIG. 4E, the mica pieces in the battery pack according to the first embodiment of the present invention may include four mica pieces 50e.

The mica pieces 50e are identical rectangles and form a square when arranged in order from the left.

In other words, each mica piece 50e has a shape obtained by dividing a square into four equal parts by straight lines perpendicular to a horizontal direction.

In the heat insulating material 40, the mica pieces 50 are bonded to the inorganic fiber mat 41 by an adhesive layer (not shown).

The adhesive layer preferably includes a material that is thermally decomposed when gas reaches the material.

When the adhesive layer includes such a material, the mica pieces 50 are more easily peeled off when gas reaches the mica pieces 50.

The material that is thermally decomposed when gas reaches the material may be, for example, an organic material having a thermal decomposition temperature of 80°C or higher, specifically a polyamide-based organic material.

When the adhesive layer (not shown) includes a polyamide-based organic material, the adhesive layer is more likely to be thermally decomposed when high-temperature gas G from an abnormal battery cell reaches the mica pieces 50.

Accordingly, the mica pieces 50 are more easily peeled off from the inorganic fiber mat 41.

In the heat insulating material 40, the mica sheet 42 may also be bonded to the inorganic fiber mat 41 by an adhesive layer.

In the heat insulating material 40, the mica pieces 50 may be bonded, not to the inorganic fiber mat 41, but to the inner walls of the openings 42a in the mica sheet 42 by the adhesive layer. Furthermore, the mica pieces 50 may be bonded to both the inorganic fiber mat 41 and the inner walls of the openings 42a in the mica sheet 42 by the adhesive layer.

When a plurality of mica pieces 50 are provided, the mica pieces 50 may be bonded to each other by the adhesive layer.

In the battery pack 10, the mica sheet 42, which serves as the second heat insulating sheet, and the mica pieces 50, which serve as the covering pieces, are made of the same material, namely mica. As will be described in detail later, such a mica sheet 42 and mica pieces 50 can be simultaneously produced by punching a monolithic mica sheet so as to form openings.

In the battery pack of the present invention, the covering pieces may be made of the same material as or a different material from the second heat insulating sheet.

A method for producing the heat insulating material included in the battery pack according to the first embodiment of the present invention will be described.

To produce the heat insulating material, an inorganic fiber mat and a mica sheet are prepared.

Next, the mica sheet is punched to form a mica sheet having openings and to produce mica pieces.

Next, the mica sheet having openings is bonded to a main surface of the inorganic fiber mat by an adhesive layer. Also, the mica pieces are bonded to the main surface of the inorganic fiber mat by the adhesive layer so that the produced mica pieces fit inside the formed openings.

Accordingly, the heat insulating material to be provided in the battery pack of the present invention can be produced.

When a plurality of mica pieces are provided, the mica pieces may be divided by cutting with a cutter or the like before being bonded.

Alternatively, a plurality of mica pieces may be formed by previously forming cuts in the mica sheet and punching the mica sheet to form segments including the cuts.

In this case, the cuts formed in the mica sheet may intersect the outlines of segments to be punched out when the mica sheet is punched.

In this case, the cuts remain in the mica sheet. In other words, the mica sheet has a shape in which the cuts are in contact with the outlines of the openings.

Furthermore, mica pieces other than the mica pieces formed by punching may be provided inside the openings.

Next, uses and an arrangement method of the battery pack according to the first embodiment of the present invention will be described.

The use of the battery pack according to the first embodiment of the present invention is not limited. For example, the battery pack may be used as a power source for an electric vehicle.

Furthermore, in the battery pack according to the first embodiment of the present invention, the safety valves in the battery cells are preferably positioned on the upper side in the vertical direction or on the lower side in the vertical direction.

In the battery pack provided such that the safety valves are positioned in this manner, high-temperature gas from an abnormal battery cell is naturally and rapidly diffused, so that a chain of thermal runaway is less likely to occur. In other words, from a fail-safe viewpoint, such an arrangement is regarded as a preferable arrangement of the battery pack.

In the battery pack according to the first embodiment of the present invention, the safety valves may be positioned on the bottom portion side or the lid member side.

As described above, from a fail-safe viewpoint, the battery pack according to the first embodiment of the present invention may be arranged such that the safety valves are positioned on the upper side in the vertical direction or on the lower side in the vertical direction.

Since the battery pack is often arranged such that the bottom portion or the lid member of the case is positioned on the lower side, positioning the safety valves on the bottom portion side or the lid member side facilitates positioning the safety valves on the upper side in the vertical direction or on the lower side in the vertical direction.

### (Second embodiment)

Next, a battery pack according to a second embodiment of the present invention will be described.

The battery pack according to the second embodiment of the present invention differs from the battery pack according to the first embodiment of the present invention in that the inorganic fiber mat includes one or more cuts continuously extending from a main surface on which the mica sheet is laminated to the opposite main surface, and in a plan view of the heat insulating material from the mica sheet side, at least part of each of the one or more cuts is positioned inside a corresponding opening.

FIG. 5A is an enlarged schematic cross-sectional view of an example of a cross-section of a heat insulating material provided in a battery pack according to a second embodiment of the present invention.

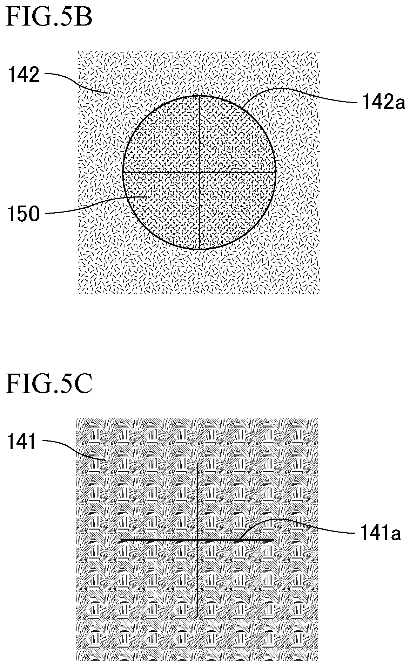

FIG. 5B is a plan view illustrating an example of a mica sheet included in the heat insulating material illustrated in FIG. 5A.

FIG. 5C is a plan view illustrating an example of an inorganic fiber mat included in the heat insulating material illustrated in FIG. 5A.

The heat insulating material 140 illustrated in FIG. 5A includes an inorganic fiber mat 141 and a mica sheet 142 laminated on the inorganic fiber mat 141.

The inorganic fiber mat 141 includes a cut 141a continuously extending from the main surface on which the mica sheet 142 is laminated to the opposite main surface.

The mica sheet 142 includes a plurality of openings 142a extending through the mica sheet 142, and four mica pieces 150 are arranged inside an opening 142a as illustrated in FIG. 5B.

The mica sheet 142 and the mica pieces 150 are bonded to the inorganic fiber mat 141 by an adhesive layer (not shown).

As illustrated in FIG. 5B, the opening 142a is circular. Moreover, the four mica pieces 150 have identical fan shapes and form a circle when combined.

The four mica pieces 150 are in exact contact with the outline of the opening 142a and are also in contact with one another to form a circle.

As illustrated in FIG. 5C, the cut 141a is formed in the inorganic fiber mat 141 such that two line segments intersect each other at right angles on the main surface.

Furthermore, in a plan view of the heat insulating material 140 from the mica sheet 142 side, the cut 141a is positioned inside the opening 142a.

The inorganic fiber mat 141 including the cut 141a formed therein allows high-temperature gas from the module side (not shown) to more easily reach the mica pieces 150 through the cut 141a.

Therefore, the gas can be prevented from flowing backward via another safety valve through the interior of the inorganic fiber mat 141.

In the heat insulating material 140, in a plan view of the inorganic fiber mat 141, the cut 141a may be formed in a line shape, may be formed in a straight-line shape, or may be formed in a curved-line shape.

A line-shaped cut can be easily formed using a cutter or the like.

In the heat insulating material 140, one cut 141a may be formed alone, or a plurality of cuts 141a may be formed.

When a plurality of cuts 141a are formed, the cuts 141a may be in contact with each other or may intersect each other.

When the cuts 141a are formed in this manner, high-temperature gas from the module side more easily passes through the inorganic fiber mat 141.

Furthermore, the cut 141a may be formed along portions where the mica pieces 150 are in contact with each other. Also, the cut 141a and portions where the mica pieces 150 are in contact with each other are preferably formed in a straight-line shape.

Such mica pieces 150 and cut 141a can be formed by simultaneously punching a monolithic mica sheet 142 and the inorganic fiber mat 141.

Preferable other shapes of a cut, as well as an opening and a mica piece, will be described below with reference to the drawings.

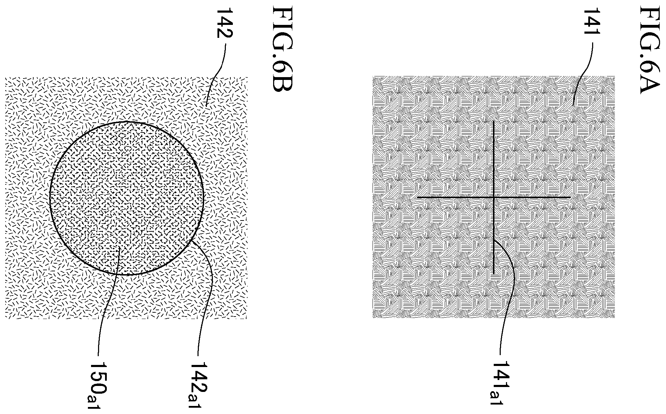

FIG. 6A is a schematic plan view illustrating another example of a cut formed in an inorganic fiber mat in the battery pack according to the second embodiment of the present invention.

FIG. 6B is a schematic plan view illustrating another example of an opening formed in a mica sheet, and a mica piece, in the battery pack according to the second embodiment of the present invention.

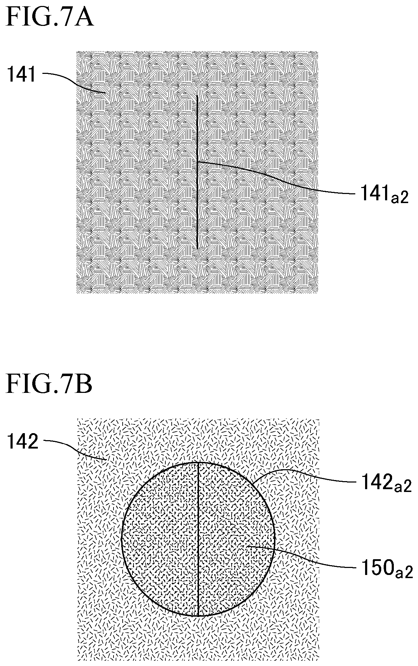

FIG. 7A is a schematic plan view illustrating another example of a cut formed in an inorganic fiber mat in the battery pack according to the second embodiment of the present invention.

FIG. 7B is a schematic plan view illustrating another example of an opening formed in a mica sheet, and mica pieces, in the battery pack according to the second embodiment of the present invention.

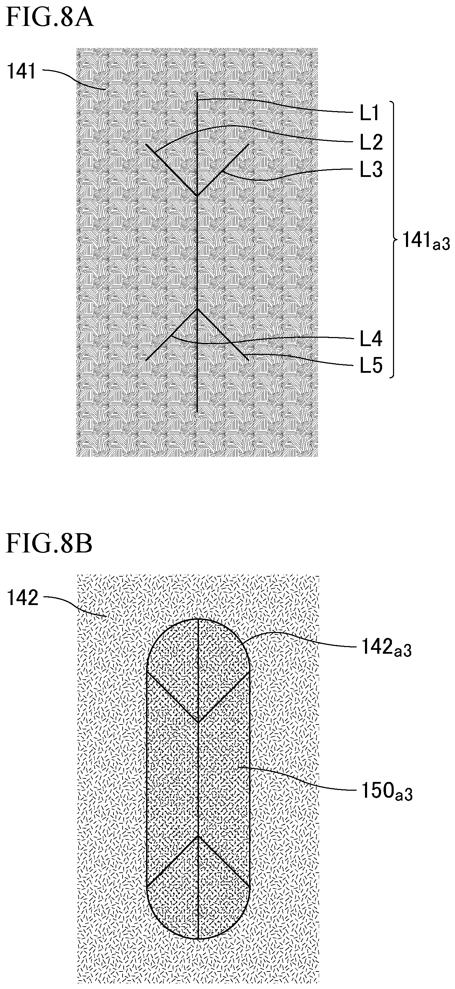

FIG. 8A is a schematic plan view illustrating another example of a cut formed in an inorganic fiber mat in the battery pack according to the second embodiment of the present invention.

FIG. 8B is a schematic plan view illustrating another example of an opening formed in a mica sheet, and mica pieces, in the battery pack according to the second embodiment of the present invention.

A cut 141a₁ illustrated in FIG. 6A is formed in the inorganic fiber mat 141 such that two line segments intersect each other at right angles.

An opening 142a₁ illustrated in FIG. 6B is circular. Also, inside the opening 142a₁, a monolithic circular mica piece 150ai that exactly fills the opening 142a₁ is arranged.

A cut 141a₂ illustrated in FIG. 7A is formed in the inorganic fiber mat 141 so as to consist of one line segment.

An opening 142a₂ illustrated in FIG. 7B is circular. Also, inside the opening 142a₂, two semicircular mica pieces 150a₂ that exactly fill the opening 142a₂ are arranged.

The cut 141a₂ is formed along the portion where the mica pieces 150a₂ are in contact with each other.

A cut 141a₃ illustrated in FIG. 8A is formed in the inorganic fiber mat 141 from one line segment L1 and four line segments L2, L3, L4, and L5 that are in contact with the line segment L1.

The point at which the line segment L1 is in contact with the line segment L2 coincides with the point at which the line segment L1 is in contact with the line segment L3. The angle formed by the line segment L1 and the line segment L2 is equal to the angle formed by the line segment L1 and the line segment L3.

Furthermore, the point at which the line segment L1 is in contact with the line segment L4 coincides with the point at which the line segment L1 is in contact with the line segment L5. The angle formed by the line segment L1 and the line segment L4 is equal to the angle formed by the line segment L1 and the line segment L5.

In other words, the cut 141a₃ is formed in a line-symmetric shape with the line segment L1 as an axis.

An opening 142a₃ illustrated in FIG. 8B is racetrack-shaped. Also, inside the opening 142a₃, six mica pieces 150a₃ are arranged so as to exactly fill the opening 142a₃.

Furthermore, the mica pieces 150a₃ are shaped to form a racetrack shape when combined, and contact portions between the mica pieces 150a₃ are formed along the cut 141a₃.

In FIG. 7A, FIG. 7B, FIG. 8A, and FIG. 8B, the cuts are formed along portions where the mica pieces are in contact with each other. In other words, the cuts coincide with portions where the mica pieces are in contact with each other.

However, in the battery pack according to the second embodiment of the present invention, in a plan view of the heat insulating material from the mica sheet side, the cuts need not coincide with portions where the mica pieces are in contact with each other.

In the above description, the ends of the cut 141a are in contact with the outline of the opening 142a. However, in the battery pack according to the second embodiment of the present invention, in a plan view of the heat insulating material from the mica sheet side, the cut may be formed to intersect the outline of the opening.

When the cut is formed in this manner, high-temperature gas from the module side more easily passes through the inorganic fiber mat 141.

The inorganic fiber mat 141 is preferably formed by processing inorganic fibers into a mat shape, the inorganic fibers including fibers having a melting point of 1000°C or higher.

Examples of such inorganic fibers preferably include silica fibers, alumina fibers, aluminosilicate fibers, and biosoluble fibers.

When the inorganic fiber mat 141 is made of such materials, the inorganic fibers, which are heat resistant, are less likely to melt due to the heat of the gas and thereby form voids.

Therefore, gas can be appropriately dispersed when passing through the inorganic fiber mat, and can be prevented from reaching the case while remaining at a high temperature.

Since the cut 141a is formed in the inorganic fiber mat 141, a sufficient gas flow path can be secured even if the inorganic fibers do not melt.

Preferable materials and the like of the mica sheet 142 and the adhesive layer are the same as the preferable materials and the like of the mica sheet 42 and the adhesive layer described in the description of the battery pack according to the first embodiment of the present invention.

A method for producing the heat insulating material included in the battery pack according to the second embodiment of the present invention will be described.

To produce the heat insulating material, an inorganic fiber mat and a mica sheet are prepared.

Next, the mica sheet is punched to form a mica sheet having openings and to produce mica pieces.

When the mica sheet is punched, the mica sheet may be punched to form only one mica piece, or may be punched to form a plurality of mica pieces. Here, the mica sheet may be punched to form only one mica piece, and then the one mica piece may be further cut into a plurality of mica pieces.

Also, cuts are formed in the inorganic fiber mat.

Next, the mica sheet having openings is bonded to a main surface of the inorganic fiber mat by an adhesive layer. At this time, the mica sheet is arranged such that the cuts in the inorganic fiber mat are positioned within openings in the mica sheet.

Thereafter, the produced one or more mica pieces are bonded to the main surface of the inorganic fiber mat by the adhesive layer so as to be accommodated inside the openings.

Accordingly, the heat insulating material arranged in the battery pack according to the second embodiment of the present invention can be produced.

Also, the heat insulating material included in the battery pack according to the second embodiment of the present invention may be produced by the following method.

To produce the heat insulating material, an inorganic fiber mat and a mica sheet are prepared.

Next, the mica sheet is punched to form a mica sheet having openings and to produce mica pieces.

Next, the mica sheet having openings is bonded to a main surface of the inorganic fiber mat by an adhesive layer. Also, the mica pieces are bonded to the main surface of the inorganic fiber mat by the adhesive layer so as to be accommodated inside the openings.

Thereafter, cuts are formed in the inorganic fiber mat together with the mica pieces. At this time, the mica pieces are divided.

Accordingly, the heat insulating material arranged in the battery pack according to the second embodiment of the present invention can be produced.

In the above method, the cuts may be formed so as to intersect the outlines of the openings.

In this case, the mica sheet has a shape in which the cuts are formed to be in contact with the outlines of the openings.

Also, the heat insulating material included in the battery pack according to the second embodiment of the present invention may be produced by the following method.

To produce the heat insulating material, an inorganic fiber mat and a mica sheet are prepared. The mica sheet is bonded to a main surface of the inorganic fiber mat by an adhesive layer.

Next, a punching die is prepared, which has a first blade having a length for punching only the mica sheet to form outlines of openings and mica pieces, and a second blade having a length for punching both the mica sheet and the inorganic fiber mat to divide the mica pieces and form cuts in the inorganic fiber mat. In other words, a punching die having two types of blades with different lengths, in which the second blade is longer than the first blade, is prepared.

Then, the mica sheet and the inorganic fiber mat may be punched from the mica sheet side using the punching die to form the openings in the mica sheet, the mica pieces, and the cuts in the inorganic fiber mat simultaneously in a single operation.

Also, the heat insulating material included in the battery pack according to the second embodiment of the present invention may be produced by the following method.

To produce the heat insulating material, an inorganic fiber mat and a mica sheet are prepared. The mica sheet is bonded to a main surface of the inorganic fiber mat by an adhesive layer.

Next, the inorganic fiber mat is punched from the inorganic fiber mat side to form cuts using a blade having a length for punching only the inorganic fiber mat.

Next, the mica sheet is punched from the mica sheet side to form openings and mica pieces using a blade having a length for punching only the mica sheet.

One mica piece may be produced or a plurality of mica pieces may be produced. One mica piece may be punched and then further divided by cutting to form a plurality of mica pieces.

### (Third embodiment)

Next, a battery pack according to a third embodiment of the present invention will be described.

The battery pack according to the third embodiment of the present invention differs from the battery packs according to the first and second embodiments of the present invention in that one or more mica pieces are arranged to cover the outlines of the openings from the case side.

The battery pack according to the third embodiment of the present invention will be described in detail below with reference to the drawings.

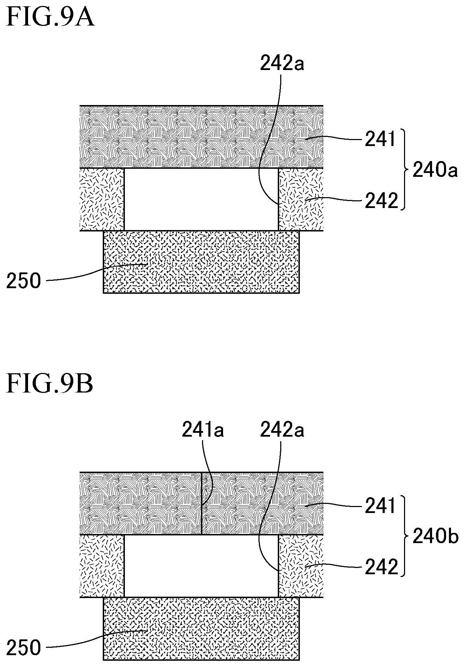

FIG. 9A is an enlarged schematic cross-sectional view of an example of a cross-section of a heat insulating material provided in the battery pack according to the third embodiment of the present invention.

FIG. 9B is an enlarged schematic cross-sectional view of another example of a cross-section of the heat insulating material provided in the battery pack according to the third embodiment of the present invention.

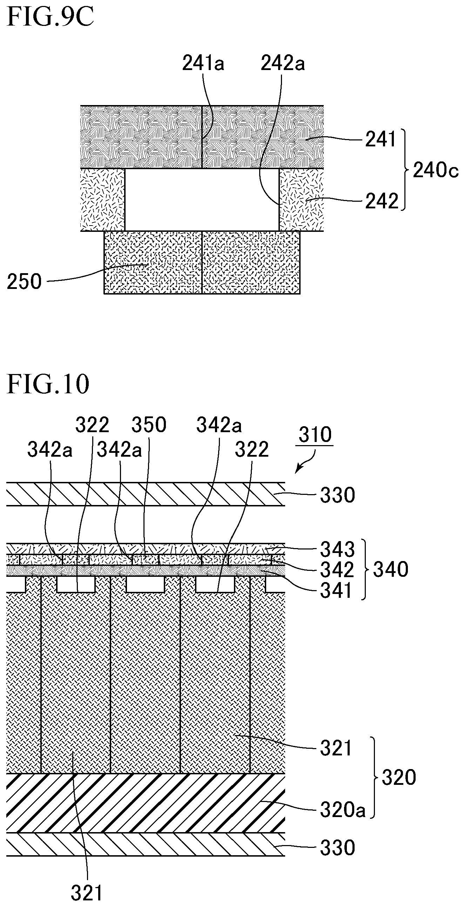

FIG. 9C is an enlarged schematic cross-sectional view of another example of a cross-section of the heat insulating material provided in the battery pack according to the third embodiment of the present invention.

A heat insulating material 240a illustrated in FIG. 9A includes an inorganic fiber mat 241 and a mica sheet 242 laminated on the inorganic fiber mat 241.

An opening 242a is formed in the mica sheet 242. The mica piece 250 covers the outline of the opening 242a from the case side (not shown).

The mica piece 250 is bonded to the surface of the mica sheet 242 by an adhesive layer (not shown).

A heat insulating material 240b illustrated in FIG. 9B differs from the heat insulating material 240a in that the inorganic fiber mat 241 includes a cut 241a continuously extending from the main surface on which the mica sheet 242 is laminated to the opposite main surface.

A heat insulating material 240c illustrated in FIG. 9C differs from the heat insulating material 240b in that it includes a plurality of mica pieces 250.

Such a provision of the mica pieces prevents formation of a gap between the mica pieces and the opening, thereby facilitating prevention of backflow of gas between the mica pieces and the opening.

Except for the above differences, preferable materials and the like of each component of the battery pack according to the third embodiment of the present invention are the same as those described for the battery pack according to the first embodiment of the present invention.

### (Fourth embodiment)

Next, a battery pack according to a fourth embodiment of the present invention will be described.

The battery pack according to the fourth embodiment of the present invention differs from the battery packs according to the first to third embodiments of the present invention in that the heat insulating material further includes a third heat insulating sheet, and the third heat insulating sheet is laminated on the mica sheet to cover the openings from the case side.

The battery pack according to the fourth embodiment of the present invention will be described in detail below with reference to the drawings.

FIG. 10 is an enlarged schematic cross-sectional view of an example of the battery pack according to the fourth embodiment of the present invention.

A battery pack 310 illustrated in FIG. 10 includes a module 320 including a plurality of battery cells 321 and a connection module member 320a that connects the battery cells 321, and a case 330 housing the module 320.

In the battery pack 310, each battery cell 321 is provided with a safety valve 322.

Furthermore, the battery pack 310 includes a heat insulating material 340 between the module 320 and the case 330.

The battery pack 310 is arranged such that the safety valves 322 are positioned on the upper side in the vertical direction. In other words, the battery pack 310 is arranged upside down relative to the battery pack 10 illustrated in FIG. 1B.

The heat insulating material 340 includes an inorganic fiber mat 341 serving as the first heat insulating sheet, a mica sheet 342 serving as the second heat insulating sheet, and a third heat insulating sheet 343 laminated in this order from the lower side.

The mica sheet 342 is provided with openings 342a extending through the mica sheet 342. Each opening 342a is provided, inside the opening, with a mica piece 350.

The mica sheet 342 and the mica piece 350 are bonded to a main surface of the inorganic fiber mat 341 by an adhesive layer (not shown).

Furthermore, the third heat insulating sheet 343 is laminated on the mica sheet 342 to cover the openings 342a from the case 330 side.

Next, the function of the third heat insulating sheet 343 will be described with reference to the drawings.

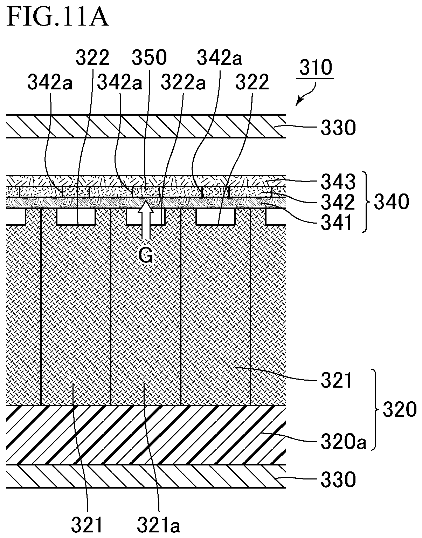

FIG. 11A to FIG. 11C are explanatory views sequentially illustrating a principle by which a chain of thermal runaway is prevented when one battery cell undergoes thermal runaway in the battery pack according to the fourth embodiment of the present invention.

As illustrated in FIG. 11A, when one battery cell 321a undergoes thermal runaway and high-temperature gas is generated from the battery cell 321a, gas G (in FIG. 11A, the gas is denoted by reference sign "G", with the gas flow direction indicated by an arrow) is discharged via a safety valve 322a.

Then, the gas discharged via the safety valve 322a reaches the heat insulating material 340.

The gas G that has reached the heat insulating material 340 first comes into contact with the inorganic fiber mat 341.

The inorganic fiber mat 341 is not dense and includes spaces present between inorganic fibers, thereby allowing the gas G to pass through the inorganic fiber mat 341.

The mica sheet 342 includes the openings 342a extending through the mica sheet 342. Each opening 342a is positioned to overlap one of the safety valves 322 in a transparent plan view of the mica sheet 342.

Therefore, the gas G that has passed through the inorganic fiber mat 341 reaches a vicinity of the opening 342a in the mica sheet 342.

Each opening 342a in the mica sheet 342 is provided, inside the opening, with a mica piece 350, and the mica piece 350 is bonded to the inorganic fiber mat 341 by an adhesive layer (not shown).

The gas G reaching the vicinity of the opening 342a in the mica sheet 342 is at a high temperature and thermally decomposes the adhesive layer bonding the mica piece 350, thereby weakening the bonding between the mica piece 350 and the inorganic fiber mat 341.

Furthermore, gas pressure is applied to the mica piece 350 from the module 320 side toward the case 330 side.

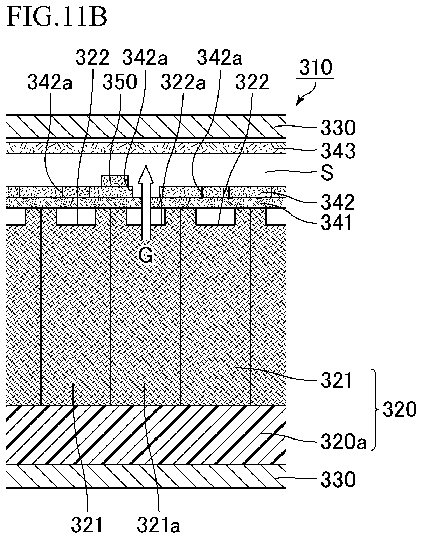

As a result, as illustrated in FIG. 11B, the mica piece 350 is peeled off from the inorganic fiber mat 341.

Then, the gas G passes through the opening 342a in the mica sheet 342 and reaches the third heat insulating sheet 343.

The gas G is blocked by the third heat insulating sheet 343. In addition, the third heat insulating sheet 343 is pushed upward by the gas G and thereby separated from the mica sheet 342.

As a result, contact between the gas G and the case 330 can be prevented.

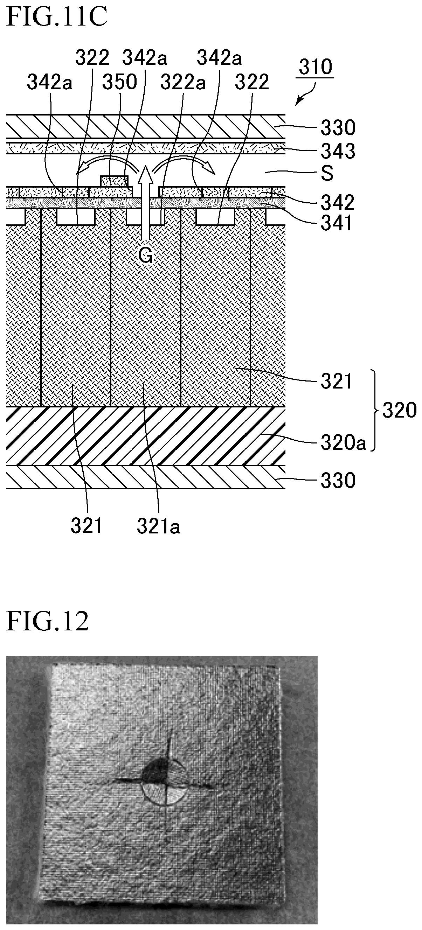

Thereafter, as illustrated in FIG. 11C, the gas G is diffused through a space S formed between the third heat insulating sheet 343 and the mica sheet 342. Then, the temperature and pressure of the gas G decrease.

The third heat insulating sheet 343 may be arranged in any manner as long as, as illustrated in FIG. 11C, the third heat insulating sheet 343 is pushed upward by the gas G and thereby separated from the mica sheet 342 to form the space S.

For example, the third heat insulating sheet 343 may be provided on the mica sheet 342 without being fixed, or may be provided on the mica sheet 342 with a part thereof being fixed.

The third heat insulating sheet 343 may be composed of a sheet member mainly containing magnesium silicate (containing magnesium silicate in an amount of about 75% by weight to 85% by weight), or a sheet member mainly containing silica.

### (Other embodiments)

In the battery packs according to the first to fourth embodiments of the present invention described above, one opening is positioned to overlap one safety valve in a transparent plan view of the mica sheet.

In the battery pack of the present invention, one opening may be positioned to overlap at least part of one safety valve with a portion of the opening not overlapping the safety valve in a transparent plan view of the mica sheet.

Furthermore, although one opening is positioned to overlap one safety valve in a transparent plan view of the mica sheet in the battery packs according to the first to fourth embodiments of the present invention described above, a plurality of openings may be positioned to overlap at least part of a single safety valve.

In the description of the first to fourth embodiments of the present invention, cases where the first heat insulating sheet is an inorganic fiber mat have been described. However, in the battery pack of the present invention, the first heat insulating sheet may be composed of, for example, a sheet, paper, board, or the like formed using inorganic particles, or a mixture of inorganic particles and inorganic fibers.

In the first to fourth embodiments of the present invention, cases where the second heat insulating sheet is a mica sheet and the covering pieces are mica pieces have been described. However, in the battery pack of the present invention, the second heat insulating sheet may be a heat-resistant resin sheet, and the covering pieces may be heat-resistant resin pieces.

Furthermore, the heat-resistant resin sheet and the heat-resistant resin pieces may be composed of polyamide resin, polybutylene terephthalate resin, or polypropylene resin.

The following matters are disclosed herein.

The present disclosure (1) relates to a battery pack including: a module including a plurality of battery cells each provided with a safety valve; a case housing the module; and a heat insulating material provided between the module and the case, wherein the heat insulating material includes a first heat insulating sheet and a second heat insulating sheet laminated on the first heat insulating sheet, the heat insulating material is arranged such that the first heat insulating sheet is positioned on the module side and the second heat insulating sheet is positioned on the case side, the second heat insulating sheet includes a plurality of openings extending through the second heat insulating sheet, each of the plurality of openings is provided with one or more covering pieces that cover at least part of the opening, the one or more covering pieces are bonded to the first heat insulating sheet and/or the second heat insulating sheet by an adhesive layer, and each of the openings is positioned to overlap at least part of a corresponding one of the safety valves in a transparent plan view of the second heat insulating sheet.

The present disclosure (2) relates to the battery pack according to the present disclosure (1), wherein each of the plurality of openings is provided, inside the opening, with at least one covering piece.

The present disclosure (3) relates to the battery pack according to the present disclosure (2), wherein each of the plurality of openings is provided, inside the opening, with a plurality of covering pieces.

The present disclosure (4) relates to the battery pack according to the present disclosure (3), wherein at least some of the plurality of covering pieces are in contact with each other.

The present disclosure (5) relates to the battery pack according to any one of the present disclosures (1) to (4), wherein at least part of the covering pieces is arranged to be in contact with an outline of the opening.

The present disclosure (6) relates to the battery pack according to any one of the present disclosures (1) to (4), wherein the covering pieces are arranged to cover an outline of the opening from the case side.

The present disclosure (7) relates to the battery pack according to any one of the present disclosures (1) to (6), wherein the first heat insulating sheet includes one or more cuts continuously extending from a main surface on which the second heat insulating sheet is laminated to an opposite main surface, and in a plan view of the heat insulating material from the second heat insulating sheet side, at least part of each of the one or more cuts is positioned inside a corresponding one of the openings.

The present disclosure (8) relates to the battery pack according to the present disclosure (7), wherein in a plan view of the heat insulating material from the second heat insulating sheet side, the one or more cuts are formed in a line shape.

The present disclosure (9) relates to the battery pack according to the present disclosure (8), wherein in a plan view of the heat insulating material from the second heat insulating sheet side, the one or more cuts are formed to intersect an outline of the opening.

The present disclosure (10) relates to the battery pack according to any one of the present disclosures (7) to (9), wherein the first heat insulating sheet includes a plurality of cuts.

The present disclosure (11) relates to the battery pack according to any one of the present disclosures (7) to (10), wherein in a plan view of the heat insulating material from the second heat insulating sheet side, the first heat insulating sheet includes a plurality of cuts formed in a line shape, and at least some of the plurality of cuts are in contact with each other.

The present disclosure (12) relates to the battery pack according to any one of the present disclosures (7) to (11), wherein the opening is provided, inside the opening, with a plurality of covering pieces, at least some of the plurality of covering pieces are in contact with each other, and in a plan view of the heat insulating material from the second heat insulating sheet side, each of the one or more cuts is formed along a portion where the covering pieces are in contact with each other.

The present disclosure (13) relates to the battery pack according to the present disclosure (12), wherein in a plan view of the heat insulating material from the second heat insulating sheet side, the portion where the covering pieces are in contact with each other is formed in a straight-line shape.

The present disclosure (14) relates to the battery pack according to any one of the present disclosures (1) to (13), wherein the openings have plan view shapes of at least one type selected from the group consisting of a triangle, a quadrangle, a hexagon, a circle, an ellipse, and a racetrack.

The present disclosure (15) relates to the battery pack according to any one of the present disclosures (1) to (14), wherein the first heat insulating sheet is an inorganic fiber mat.

The present disclosure (16) relates to the battery pack according to the present disclosure (15), wherein the inorganic fiber mat is formed by processing inorganic fibers into a mat shape, the inorganic fibers including at least one type of fiber selected from silica fibers, glass fibers, alumina fibers, aluminosilicate fibers, basalt fibers, rock wool, and biosoluble fibers.

The present disclosure (17) relates to the battery pack according to the present disclosure (15) or (16), wherein the inorganic fiber mat is formed by processing inorganic fibers into a mat shape, the inorganic fibers including fibers having a melting point of 1000°C or higher.

The present disclosure (18) relates to the battery pack according to any one of the present disclosures (15) to (17), wherein the inorganic fiber mat is formed by processing inorganic fibers into a mat shape, the inorganic fibers including fibers having a melting point of lower than 1000°C.

The present disclosure (19) relates to the battery pack according to any one of the present disclosures (1) to (18), wherein the second heat insulating sheet is a mica sheet.

The present disclosure (20) relates to the battery pack according to any one of the present disclosures (1) to (18), wherein the second heat insulating sheet is a heat-resistant resin sheet.

The present disclosure (21) relates to the battery pack according to any one of the present disclosures (1) to (20), wherein the covering pieces are made of the same material as the second heat insulating sheet.

The present disclosure (22) relates to the battery pack according to any one of the present disclosures (1) to (21), wherein the adhesive layer includes an organic adhesive layer.

The present disclosure (23) relates to the battery pack according to any one of the present disclosures (1) to (22), wherein the heat insulating material further includes a third heat insulating sheet, and the third heat insulating sheet is laminated on the second heat insulating sheet to cover the openings from the case side.

The present disclosure (24) relates to the battery pack according to any one of the present disclosures (1) to (23), wherein the case includes a housing member including a bottom portion and a side wall portion, and a lid member covering the housing member, and the safety valves are positioned on the bottom portion side or the lid member side.

### EXAMPLES

### <Rupture test 1>

### (Example 1-1)

An inorganic fiber mat made of silica fibers and having a thickness of 5 mm was prepared.

In addition, a mica sheet having a thickness of 0.1 mm was prepared, and the mica sheet was punched so that an opening having a circular shape with a diameter of 8 mm was formed.

The mica sheet including the opening was bonded to a main surface of the inorganic fiber mat using a polyamide-based organic material (heat-resistant temperature: 100°C).

In addition, a punched circular fragment (mica piece) was bonded to the main surface of the inorganic fiber mat using a polyamide-based organic material (heat-resistant temperature: 100°C) so as to be accommodated inside the opening.

Next, the mica sheet, the mica piece, and the inorganic fiber mat were punched such that two line segments of 30 mm intersected each other at right angles and the intersection point coincided with the center of the mica piece.

Through the above processes, a heat insulating material according to Example 1-1 was produced. The obtained heat insulating material is shown in FIG. 12.

FIG. 12 is a photograph of a heat insulating material according to Example 1-1 of the present invention taken from the mica sheet side.

### (Example 1-2)

An inorganic fiber mat made of silica fibers and having a thickness of 5 mm was prepared.

In addition, a mica sheet having a thickness of 0.1 mm was prepared, and the mica sheet was punched so that an opening having a circular shape with a diameter of 8 mm was formed. Thereafter, a punched circular fragment (mica piece) was taken out.

The mica sheet including the opening was bonded to a main surface of the inorganic fiber mat using a polyamide-based organic material (heat-resistant temperature: 100°C).

Next, the mica sheet and the inorganic fiber mat were punched such that two line segments of 30 mm intersected each other at right angles and the intersection point coincided with the center of the opening.

Thereafter, the mica piece was bonded to the main surface of the inorganic fiber mat using a polyamide-based organic material (heat-resistant temperature: 100°C) so as to be accommodated inside the opening.

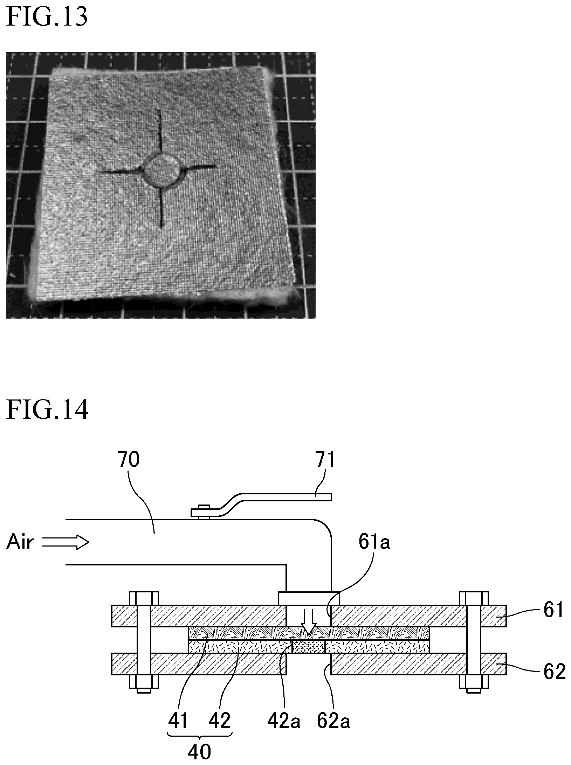

Through the above processes, a heat insulating material according to Example 1-2 was produced. The obtained heat insulating material is shown in FIG. 13.

FIG. 13 is a photograph of a heat insulating material according to Example 1-2 of the present invention taken from the mica sheet side.

Using the heat insulating materials according to Example 1-1 and Example 1-2, Rupture test 1 simulating a case where gas is injected from a safety valve of a battery cell was conducted.

FIG. 14 is a schematic explanatory view of Rupture test 1.

As illustrated in FIG. 14, each heat insulating material 40 was sandwiched and fixed between a first jig having a first opening 61a and a second jig 62 having a second opening 62a. The first opening 61a and the second opening 62a each had a circular shape with a radius of 10 mm.

The heat insulating material 40 was arranged such that the mica sheet 42 was positioned on the second jig 62 side.

In addition, in a view from the second jig 62 side, the center of gravity of the first opening 61a, the center of gravity of the opening 42a in the mica sheet 42, and the center of gravity of the second opening 62a were made to coincide with each other.

Then, the heat insulating material 40 was compressed to a thickness of 3 mm.

Next, the heat insulating material 40 was heated at 250°C. The heating weakened the adhesive force of the polyamide-based organic material, thereby making the mica piece easily separable from the inorganic fiber mat.

Next, a gas pipe 70 having a gas valve 71 was connected to the first opening 61a.

Thereafter, air at 25°C was supplied to the gas pipe such that a gas pressure before opening of the gas valve 71 was 200 kPa. Then, the gas valve 71 was opened, and air was injected into the heat insulating material 40.

The gas pressure after opening of the gas valve 71 was measured.

In the test using the heat insulating material according to Example 1-1, the gas pressure after opening of the gas valve was 90 kPa.

In the test using the heat insulating material according to Example 1-2, the gas pressure after opening of the gas valve was 94 kPa.

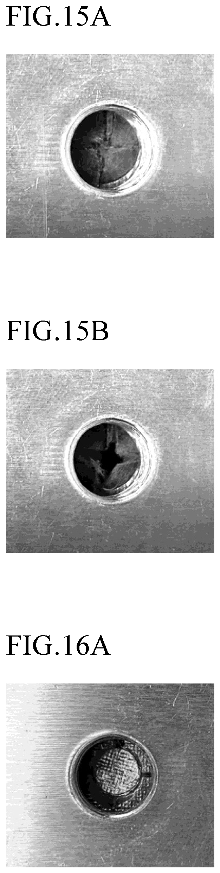

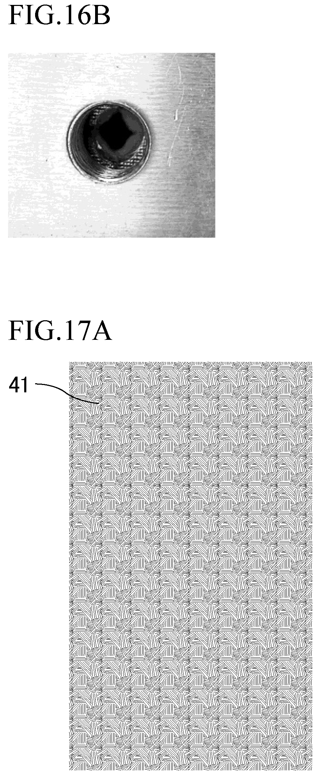

In addition, in each example, whether the mica piece was peeled off from the inorganic fiber mat was observed. The results are shown in FIG. 15A, FIG. 15B, FIG. 16A, and FIG. 16B.

FIG. 15A is a photograph taken from the second jig side before opening of the gas valve in the gas pressure rupture test using the heat insulating material according to Example 1-1.

FIG. 15B is a photograph taken from the second jig side after opening of the gas valve in the gas pressure rupture test using the heat insulating material according to Example 1-1.

FIG. 16A is a photograph taken from the second jig side before opening of the gas valve in the gas pressure rupture test using the heat insulating material according to Example 1-2.

FIG. 16B is a photograph taken from the second jig side after opening of the gas valve in the gas pressure rupture test using the heat insulating material according to Example 1-2.

As shown in FIG. 15A, FIG. 15B, FIG. 16A, and FIG. 16B, in both the case where the heat insulating material according to Example 1-1 was used and the case where the heat insulating material according to Example 1-2 was used, the mica piece was peeled off from the inorganic fiber mat.

These results suggest that, in battery packs using the heat insulating material according to Example 1-1 and the heat insulating material according to Example 1-2, when high-temperature gas is discharged via a safety valve due to thermal runaway, the mica piece is peeled off from the inorganic fiber mat, and the gas is dispersed between the heat insulating material and the case.

### <Rupture test 2>

### (Example 2-1) to (Example 2-3) and (Comparative Example 2-1)

An inorganic fiber mat made of silica fibers and having a thickness of 5 mm, and a mica sheet having a thickness of 0.1 mm were prepared.

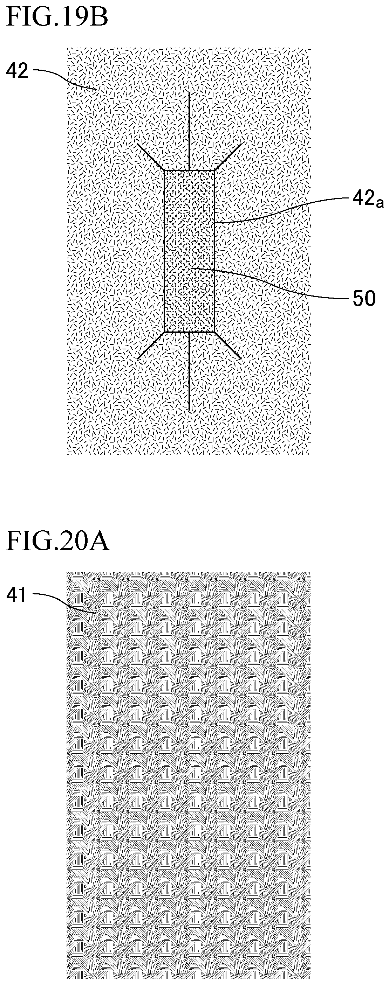

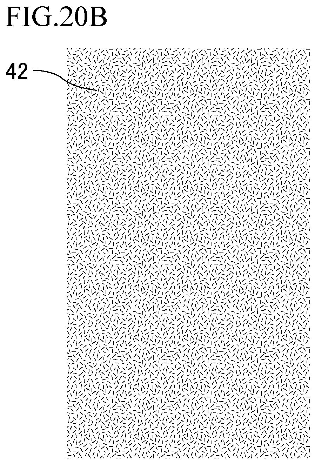

Next, as illustrated in FIG. 17A and FIG. 17B, FIG. 18A and FIG. 18B, FIG. 19A and FIG. 19B, and FIG. 20A and FIG. 20B, the inorganic fiber mat and the mica sheet were punched such that a cut 41a, an opening 42a, and one or more mica pieces 50 were formed (no cut was formed in the inorganic fiber mat in FIG. 17A and FIG. 20A, and no opening was formed in the mica sheet in FIG. 20B).

FIG. 17A is a schematic plan view of an inorganic fiber mat according to Example 2-1.

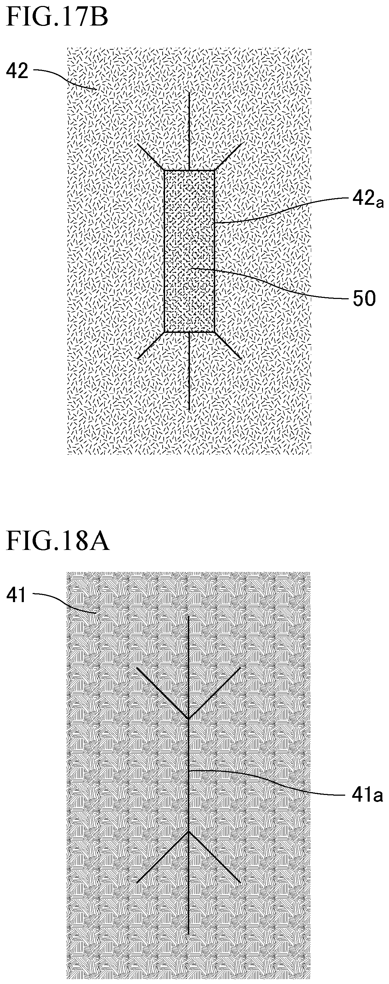

FIG. 17B is a schematic plan view of an opening in the mica sheet and a mica piece according to Example 2-1.

FIG. 18A is a schematic plan view of a cut in an inorganic fiber mat according to Example 2-2.

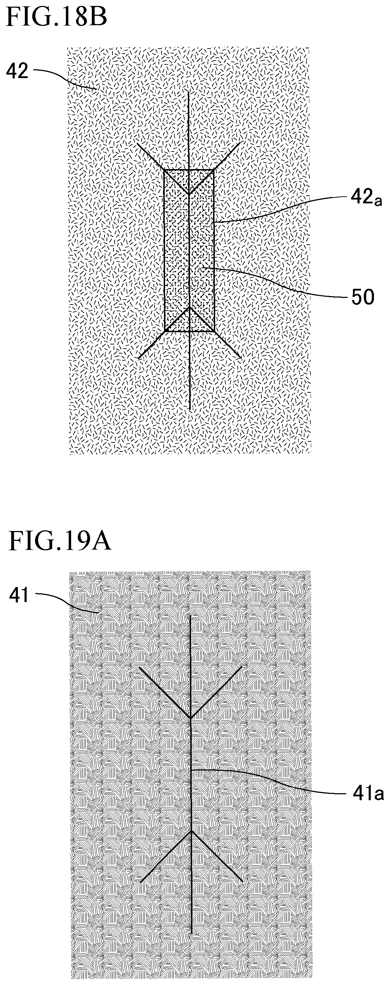

FIG. 18B is a schematic plan view of an opening in a mica sheet and mica pieces according to Example 2-2.

FIG. 19A is a schematic plan view of a cut in an inorganic fiber mat according to Example 2-3.

FIG. 19B is a schematic plan view of an opening in a mica sheet and a mica piece according to Example 2-3.

FIG. 20A is a schematic plan view of an inorganic fiber mat according to Comparative Example 2-1.

FIG. 20B is a schematic plan view of a mica sheet according to Comparative Example 2-1.

The inorganic fiber mat illustrated in FIG. 17A and the mica sheet and mica piece illustrated in FIG. 17B were used together, and the mica sheet including an opening was bonded to a main surface of the inorganic fiber mat using a polyamide-based organic material (heat-resistant temperature: 100°C).

In addition, the punched circular fragment (mica piece) was bonded to the main surface of the inorganic fiber mat using a polyamide-based organic material (heat-resistant temperature: 100°C) so as to be accommodated inside the opening.

Through the above processes, a heat insulating material according to Example 2-1 was produced.

Similarly, the inorganic fiber mat illustrated in FIG. 18A and the mica sheet and mica pieces illustrated in FIG. 18B were used together to produce a heat insulating material according to Example 2-2.

Also, similarly, the inorganic fiber mat illustrated in FIG. 19A and the mica sheet and mica piece illustrated in FIG. 19B were used together to produce a heat insulating material according to Example 2-3.

Also, similarly, the inorganic fiber mat illustrated in FIG. 20A and the mica sheet illustrated in FIG. 20B were used together, and the mica sheet was bonded to a main surface of the inorganic fiber mat using a polyamide-based organic material (heat-resistant temperature: 100°C), so that a heat insulating material according to Comparative Example 2-1 was produced.

Using the heat insulating materials according to Example 2-1 to Example 2-3 and Comparative Example 2-1, Rupture test 2 simulating a case where gas is injected from a safety valve of a battery cell was conducted.

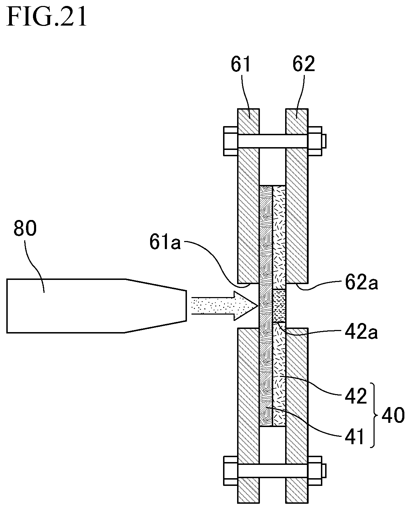

FIG. 21 is a schematic explanatory view illustrating Rupture test 2.

As illustrated in FIG. 21, in Rupture test 2, each heat insulating material 40 was sandwiched and fixed between a first jig having a first opening 61a and a second jig 62 having a second opening 62a. At this time, the inorganic fiber mat 41 was arranged on the first jig 61 side, and the mica sheet 42 was arranged on the second jig 62 side.

In addition, in a view from the second jig 62 side, the center of gravity of the first opening 61a, the center of gravity of the opening 42a in the mica sheet 42, and the center of gravity of the second opening 62a were made to coincide with each other.

Then, the heat insulating material 40 was compressed to a thickness of 3 mm.

Thereafter, heated alumina particles were thermally sprayed from a blast apparatus 80 such that the heated alumina particles reached the heat insulating material through the first opening 61a.

The thermal spraying conditions were as follows.

### <Thermal spraying conditions>

Carrier gas: acetylene gas
Carrier gas temperature: 3000°C
Blast particles: alumina particles
Thermal spraying distance: 150 mm
Thermal spraying time: 30 seconds

When the heated alumina particles reached the inorganic fiber mat, the surface temperature of the inorganic fiber mat was 1300°C.

After the thermal spraying, an evaluation was made by observing whether the mica piece 50 was peeled off from the inorganic fiber mat 41 (i.e., whether the sprayed material could pass through the heat insulating material).

The evaluation criteria were as follows. The evaluation results are shown in Table 1.

### <Evaluation criteria>

∘∘: The mica piece was peeled off from the inorganic fiber mat, and the sprayed material sufficiently passed through the heat insulating material.
∘: The mica piece was peeled off from the inorganic fiber mat, and the sprayed material passed through the heat insulating material, but traces were observed in which part of the sprayed material remained (was reflected).
×: The sprayed material was reflected by the heat insulating material and could not pass through the heat insulating material.

**[Table 1]**

| | Cut in inorganic fiber mat | Opening in mica sheet | Evaluation |
|---|---|---|---|
| Example 2-1 | Absent | Present | ○ |
| Example 2-2 | Present | Present | ○○ |
| Example 2-3 | Present | Present | ○○ |
| Comparative Example 2-1 | Absent | Absent | × |

As shown in Table 1, in each example in which an opening was formed in the mica sheet, the sprayed material was found to pass through the heat insulating material.

These results suggest that, in battery packs using the heat insulating material according to any one of Examples 2-1 to 2-3, when high-temperature gas is ejected from a safety valve due to thermal runaway, the gas passes through the heat insulating material and is dispersed between the heat insulating material and the case.

### REFERENCE SIGNS LIST

10, 310 battery pack
20, 320 module
20a, 320a connection module member
20b busbar
21, 21a, 321, 321a battery cell
22, 22a, 322, 322a safety valve
23 terminal
30, 330 case
31 housing member
31b bottom portion
31s side wall
32 lid member
40, 140, 240a, 240b, 240c, 340 heat insulating material
41, 141, 241, 341 inorganic fiber mat
42, 142, 242, 342 mica sheet
42a, 142a, 142a₁, 142a₂, 142a₃, 242a, 342a opening
50, 50a, 50b₁, 50b₂, 50b₃, 50b₄, 50c₁, 50c₂, 50d, 50e, 150, 150a₁, 150a₂, 150a₃, 250, 350 mica piece
61 first jig
61a first opening
62 second jig
62a second opening
70 gas pipe
71 gas valve
80 blast apparatus
141a, 141a₁, 141a₂, 141a₃, 241a cut
343 third heat insulating sheet

## Claims

1. A battery pack comprising:
a module including a plurality of battery cells each provided with a safety valve;
a case housing the module; and
a heat insulating material provided between the module and the case,
wherein the heat insulating material includes a first heat insulating sheet and a second heat insulating sheet laminated on the first heat insulating sheet,
the heat insulating material is arranged such that the first heat insulating sheet is positioned on the module side and the second heat insulating sheet is positioned on the case side,
the second heat insulating sheet includes a plurality of openings extending through the second heat insulating sheet,
each of the plurality of openings is provided with one or more covering pieces that cover at least part of the opening,
the one or more covering pieces are bonded to the first heat insulating sheet and/or the second heat insulating sheet by an adhesive layer, and
each of the openings is positioned to overlap at least part of a corresponding one of the safety valves in a transparent plan view of the second heat insulating sheet.

2. The battery pack according to claim 1,
wherein each of the plurality of openings is provided, inside the opening, with at least one covering piece.

3. The battery pack according to claim 2,
wherein each of the plurality of openings is provided, inside the opening, with a plurality of covering pieces.

4. The battery pack according to claim 3,
wherein at least some of the plurality of covering pieces are arranged to be in contact with each other.

5. The battery pack according to any one of claims 1 to 4,
wherein at least part of the covering pieces is arranged to be in contact with an outline of the opening.

6. The battery pack according to any one of claims 1 to 4,
wherein the covering pieces are arranged to cover an outline of the opening from the case side.

7. The battery pack according to any one of claims 1 to 6,
wherein the first heat insulating sheet includes one or more cuts continuously extending from a main surface on which the second heat insulating sheet is laminated to an opposite main surface, and
in a plan view of the heat insulating material from the second heat insulating sheet side, at least part of each of the one or more cuts is positioned inside a corresponding one of the openings.

8. The battery pack according to claim 7,
wherein in a plan view of the heat insulating material from the second heat insulating sheet side, the one or more cuts are formed in a line shape.

9. The battery pack according to claim 8,
wherein in a plan view of the heat insulating material from the second heat insulating sheet side, the one or more cuts are formed to intersect an outline of the opening.

10. The battery pack according to any one of claims 7 to 9,
wherein the first heat insulating sheet includes a plurality of cuts.

11. The battery pack according to any one of claims 7 to 10,
wherein in a plan view of the heat insulating material from the second heat insulating sheet side,
the first heat insulating sheet includes a plurality of cuts formed in a line shape, and
at least some of the plurality of cuts are in contact with each other.

12. The battery pack according to any one of claims 7 to 11,
wherein the opening is provided, inside the opening, with a plurality of covering pieces,
at least some of the plurality of covering pieces are in contact with each other, and
in a plan view of the heat insulating material from the second heat insulating sheet side, each of the one or more cuts is formed along a portion where the covering pieces are in contact with each other.

13. The battery pack according to claim 12,
wherein in a plan view of the heat insulating material from the second heat insulating sheet side, the portion where the covering pieces are in contact with each other is formed in a straight-line shape.

14. The battery pack according to any one of claims 1 to 13,
wherein the openings have plan view shapes of at least one type selected from the group consisting of a triangle, a quadrangle, a hexagon, a circle, an ellipse, and a racetrack.

15. The battery pack according to any one of claims 1 to 14,
wherein the first heat insulating sheet is an inorganic fiber mat.

16. The battery pack according to claim 15,
wherein the inorganic fiber mat is formed by processing inorganic fibers into a mat shape, the inorganic fibers including at least one type of fiber selected from silica fibers, glass fibers, alumina fibers, aluminosilicate fibers, basalt fibers, rock wool, and biosoluble fibers.

17. The battery pack according to claim 15 or 16,
wherein the inorganic fiber mat is formed by processing inorganic fibers into a mat shape, the inorganic fibers including fibers having a melting point of 1000°C or higher.

18. The battery pack according to any one of claims 15 to 17,
wherein the inorganic fiber mat is formed by processing inorganic fibers into a mat shape, the inorganic fibers including fibers having a melting point of lower than 1000°C.

19. The battery pack according to any one of claims 1 to 18,
wherein the second heat insulating sheet is a mica sheet.

20. The battery pack according to any one of claims 1 to 18,
wherein the second heat insulating sheet is a heat-resistant resin sheet.

21. The battery pack according to any one of claims 1 to 20,
wherein the covering pieces are made of the same material as the second heat insulating sheet.

22. The battery pack according to any one of claims 1 to 21,
wherein the adhesive layer includes an organic adhesive layer.

23. The battery pack according to any one of claims 1 to 22,
wherein the heat insulating material further includes a third heat insulating sheet, and
the third heat insulating sheet is laminated on the second heat insulating sheet to cover the openings from the case side.

24. The battery pack according to any one of claims 1 to 23,
wherein the case includes a housing member including a bottom portion and a side wall portion, and a lid member covering the housing member, and
the safety valves are positioned on the bottom portion side or the lid member side.
